Europäisches Patentamt

European Patent Office

Office européen des brevets

(19)

(11) **EP 1 081 353 B1**

(12) **EUROPEAN PATENT SPECIFICATION**

(45) Date of publication and mention
of the grant of the patent:
**23.06.2004 Bulletin 2004/26**

(51) Int Cl.$^7$: **F02B 37/24**, F02D 33/02

(21) Application number: **00116265.0**

(22) Date of filing: **09.08.2000**

(54) **Control system for supercharged engine**

Regelsystem für aufgeladene Brennkraftmaschine

Système de commande pour un moteur suralimenté

(84) Designated Contracting States:
**DE ES FR GB IT**

(30) Priority: **30.08.1999 JP 24371799**

(43) Date of publication of application:
**07.03.2001 Bulletin 2001/10**

(73) Proprietor: **Mazda Motor Corporation**
**Aki-gun, Hiroshima 730-8670 (JP)**

(72) Inventors:
• **Matsue, Kouta**
**Aki-gun, Hiroshima 730-8670 (JP)**

• **Imai, Takeshi**
**Aki-gun, Hiroshima 730-8670 (JP)**
• **Shimizu, Ryou**
**Aki-gun, Hiroshima 730-8670 (JP)**
• **Shouji, Masatoshi**
**Aki-gun, Hiroshima 730-8670 (JP)**

(74) Representative: **Müller-Boré & Partner**
**Patentanwälte**
**Grafinger Strasse 2**
**81671 München (DE)**

(56) References cited:
**EP-A- 0 323 256**          **US-A- 5 123 246**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to a control system for a supercharged engine and, more particularly, to a control system for a supercharged engine for feedback controlling a supercharging pressure that is generated by a variable geometry supercharger.

In recent years, there have been widely employed turbochargers which increase an amount of air admitted into a combustion chamber by utilizing exhaust gas energy. Such a turbocharger, which generally comprises a turbine disposed in an intake air passage so as to be driven by an exhaust gas stream and a blower disposed in an exhaust gas passage and driven by the turbine, performs accelerated mixing of intake air and fuel and increases the rate of utilization of oxygen with an effect of improving combustion efficiency. Because of the significant effects, the turbocharger is, in particular, installed to a diesel engine as measures to lower emission levels.

In recent years, variable geometry turbochargers have been widely employed. Such a variable geometry turbocharger has variable-area nozzles which are formed by a number of movable vanes arranged at a turbine inlet in a turbine chamber and variable in angle so as to vary a nozzle area for variations of turbine efficiency. The variable geometry turbocharger controls a supercharging pressure in an intake air passage according to engine operating conditions by linearly varying the turbine efficiency by varying a nozzle area relative to the turbine. In a variable geometry turbocharger such as known from, for example, Japanese Unexamined Patent Publication No.5 - 86880, a target supercharging pressure is determined on the basis of engine operating conditions such as engine speed and/or engine load, and a nozzle area relative to a turbine is feedback controlled so as to produce a target supercharging pressure in an intake air passage. This variable geometry turbocharger can control a practical supercharging pressure in the intake air passage with high preciseness so as to provide an ideally optimum supercharging pressure, which is always desirable for both engine acceleration and control of an emission level of NOx.

In general, the target supercharging pressure is set to a high level in order to supply an amount of intake air that is increased more with an increase in fuel injection amount according to increases in accelerator travel. In other words, the nozzle area relative to the turbine is decreased to rise a rotational turbine speed. The target supercharging pressure is electronically calculated in a short period of time in, for example, an electronic engine control unit. On the other hand, the feedback control of supercharging pressure is started by detecting a practical supercharging pressure by a pressure sensor before everything and effected by regulating the nozzle area according to feedback control values that are proportional to pressure differences of the practical supercharging pressure from the target supercharging pressure. In the case of feedback controlling supercharging pressure, detection of a feedback controlled supercharging pressure takes a long time as compared with a calculation time for a target supercharging pressure, so that the detection of feedback controlled supercharging pressure tends to be accompanied by an response delay. As a result; the feedback control loses control stability due to hunting of the control and/or overshooting of practical supercharging pressure, which leads to fluctuations in engine output. Besides, since, on a demand for engine acceleration due to a change in engine operating condition from lower loading to higher loading as a result of, for example stepping down the accelerator pedal, a difference of supercharging pressure occurs between a practical supercharging pressure which rises relatively slowly from a target supercharging pressure which is changed to a higher level immediately following the change in engine operating condition, a large feedback control value is established, as a result of which the supercharging pressure overshoots on an excessive side with an effect of decreasing the nozzle area in excess, so as to cause aggravation of the reliability of the supercharger such that the turbine gets an overspeed or a turbine shaft seizes.

US 5,123,246 discloses a method for control of a variable geometry turbocharger including sensors for detecting a intake manifold boost pressure and engine operating parameters.

It is an object of the present invention to provide a control system for an engine equipped with a variable geometry supercharger which performs supercharging pressure feedback control without causing problems such as getting an overspeed and causing a turbine shaft to seize.

It is another object of the present invention to provide a control system for an engine equipped with a variable geometry supercharger which prevents the variable geometry supercharger from encountering aggravation of the reliability due to feedback control of a supercharging pressure upon an occurrence of transition of engine operating condition from a lower engine load condition to a higher engine load condition.

The foregoing objects of the present invention are accomplished by a system of controlling an engine equipped with a supercharger for generating a supercharging pressure in an intake air passage which has a nozzle variable in nozzle area relative to a turbine. The control system comprises pressure detection means for detecting a practical supercharging pressure in the intake air passage, condition detection means for detecting an operating condition of the supercharged; and control means for determining a target supercharging pressure according to the engine operating condition, performing feedback control of supercharging pressure by controlling a nozzle area of the variable nozzle so as to bring the practical supercharging pressure in the intake air passage to the target supercharging pressure. The control means restrains or eases the feedback control of supercharging pressure temporarily when the engine operating condition changes from a region of lower engine loads to a region of higher engine loads. With the supercharged engine control system, when the engine changes in operating condition from the region of lower engine loads to the region of higher engine loads due to stepping down an accelerator pedal for, for example, acceleration, the feedback control of supercharging pressure is temporarily restrained; so as to prevent or significantly reduces overshooting and hunting of the supercharging pressure which occurs due to a large difference between a practical and a target supercharging pressure at the beginning of a change in operating condition to the region of large engine loads. As a result, the problems such that the turbine overspeeds and a turbine shaft seizes which leads to aggravation of the reliability of the variable geometry supercharger.

The supercharged engine control system removes the restraint of the feedback control of supercharging pressure by, for example, prohibiting the control of the nozzle area, voiding a feedback control value as a result of implementation of the feedback control of the nozzle area, or decreasing a gain of the feedback control of supercharging pressure, when a difference between a practical and a target supercharging pressure is smaller than a specified value. The restraint of the feedback control of supercharging pressure is removed when the supercharging pressure difference falls down below the specified value and commences the feedback control. Accordingly, a large feedback control value at the beginning of the feedback control of supercharging pressure is not large, as a result of which the supercharging pressure is prevented from overshooting and/or hunting. The restraint of the feedback may be carried out by at least one or any one of prohibiting the feedback control of the nozzle, voiding a feedback control value as a result of implementation of the feedback control of the nozzle, and decreasing a gain of the feedback control of the nozzle, whichever is effective in securely easing the feedback control of supercharging pressure.

The supercharged engine control system may prohibit the feedback control when the engine operating condition falls in a region of lower engine speeds. Since the feedback control of supercharging pressure is not implemented in the region of lower engine speeds where , if the feedback control of supercharging pressure is implemented, a response delay becomes more significant and leads to more remarkable aggravation of the reliability of the variable geometry supercharger because an increasing or a decreasing change in practical supercharging pressure is apt to delay due to a small amount of exhaust gas, aggravation of the reliability of the variable geometry supercharger is eased.

The supercharged engine control system may control the nozzle area so as to become greater than a nozzle area at which the variable geometry supercharger generates the target supercharging pressure. Since, during restraining the feedback control of supercharging pressure, the nozzle is controlled not based on practical supercharging pressure but simply to a nozzle area larger than the nozzle area for the target supercharging pressure, the turbine increases its speed relatively slowly with an effect of a relatively gentle rise in practical supercharging pressure. As a result of which, besides the feedback control of supercharging pressure is restrained with an effect of preventing the practical supercharging pressure overshooting and hunting, it guarantees the practical supercharging pressure to reach a level within a specified extent from the target supencharging pressure without causing overshooting, so that the feedback control of supercharging pressure commences without accompanying a delay in vain.

The above and other objects and features of the present invention will be clearly understood from the following description with respect to the preferred embodiment thereof when considered in conjunction with the accompanying drawings, in which:

Figure 1 is an illustration showing the overall structure of a supercharging pressure control system in accordance with a preferred embodiment of the invention;

Figure 2 is an enlarged cross-sectional view showing an interior structure of a turbine of a variable geometric turbocharger;

Figure 3 is an enlarged cross-sectional view of a vacuum operated actuator,

Figure 4 is an enlarged cross-sectional view of an exhaust gas recirculation valve;

Figure 5 is a control map of engine operating zone for implementation of exhaust gas recirculation control;

Figure 6 is a control map of engine operating zone with respect to nozzle area;

Figure 7 is a control map of engine operating zone for implementation of supercharging pressure feedback control;

Figure 8 is a control map of engine operating zone for implementation of supercharging pressure open control;

Figures 9A and 9B are respective parts of a flow chart illustrating a sequence routine of control of supercharging pressure control solenoid valve;

Figure 10 is a flow chart illustrating a sequence routine of target negative pressure setting control;

Figure 11 is a control map of a charging cut-off region;

Figure 12 is a characteristic curve of nozzle area with respect to atmosphere temperature;

Figure 13 is a characteristic curve of nozzle area with respect to intake air temperature;

Figure 14 is a flow chart illustrating a sequence routine of negative pressure feedback control;

Figures 15A, 15B and 15C are respective parts of a flow chart illustrating a sequence routine of negative pressure learning control;

Figure 16 is a characteristic curve provided by the negative pressure learning control;

Figure 17 is a diagram showing data that are obtained from the characteristic curve provided by the negative pressure learning control;

Figure 18 is a time chart of the negative pressure learning control;

Figure 19 is a flow chart illustrating a sequence routine of supercharging pressure feedback control;

Figure 20 is a time chart of the supercharging pressure feedback control; and

Figure 21 is a diagram showing the relationship between battery voltage and correction factor for a calculation of duty rate.

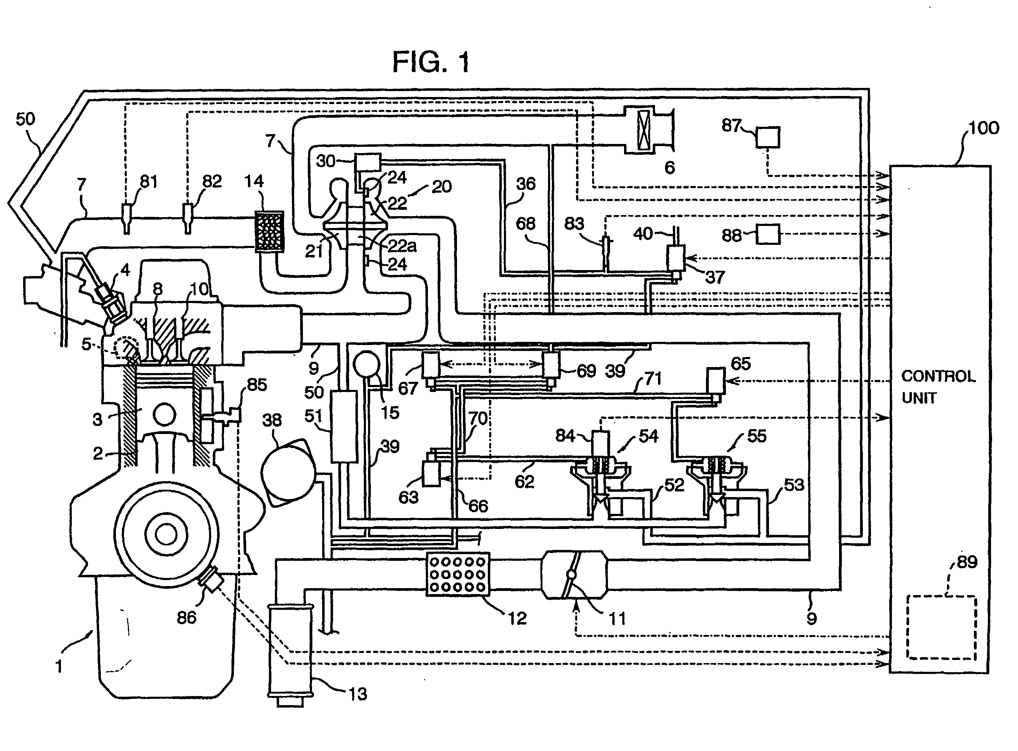

Referring to the drawings in detail, and in particular, to Figure 1 which shows the overall structure of an exhaust gas purifying system for a diesel engine according to a preferred embodiment of the invention, denoted by a reference numeral 1 is a multiple cylinder diesel engine carried in a vehicle. The diesel engine 1 has multiple cylinders 2 (only one of which is shown in the figure), in which pistons 3 are received to slide. A pre-combustion chamber 5 is formed above a combustion chamber that is formed inside each cylinder 2 by the piston 3. A fuel injector (fuel injection valve) 4 is located such as to deliver fuel into the pre-combustion chamber 5. Intake air is introduced into the engine through an intake air passage 7 which is equipped with an air cleaner 6 at its upstream end and branches off at its downstream end so as to lead to intake ports of the cylinders 2. The intake port is opened and closed by an intake valve 8 at an appropriate timing The intake air passage 6 is provided with a blower 21 forming a part of a variable geometry type of turbocharger 20 and an intercooler 14. Exhaust gas is discharged through an exhaust gas passage 9 which branches off at its upstream end so as to extend from exhaust ports of the cylinders 2. The exhaust port is opened and closed by an exhaust valve 9 at an appropriate timing. The exhaust gas passage 9 is provided with a turbine wheel 22 pivotally mounted on a turbine shaft 22a forming a part of the variable geometry turbocharger 20, an exhaust shutter 11 operative to promote warming-up of the diesel engine while an engine cooling water is at low temperatures, a catalytic converter 12 operative to lower emission levels of HC, CO and NOx, and a silencer 13. The turbine wheel 22, which is driven by exhaust gas in the exhaust gas passage 9, drives the blower 21 to compress intake air in the intake air passage 7. The compressed intake air is cooled down 1 to increase consistency thereof.

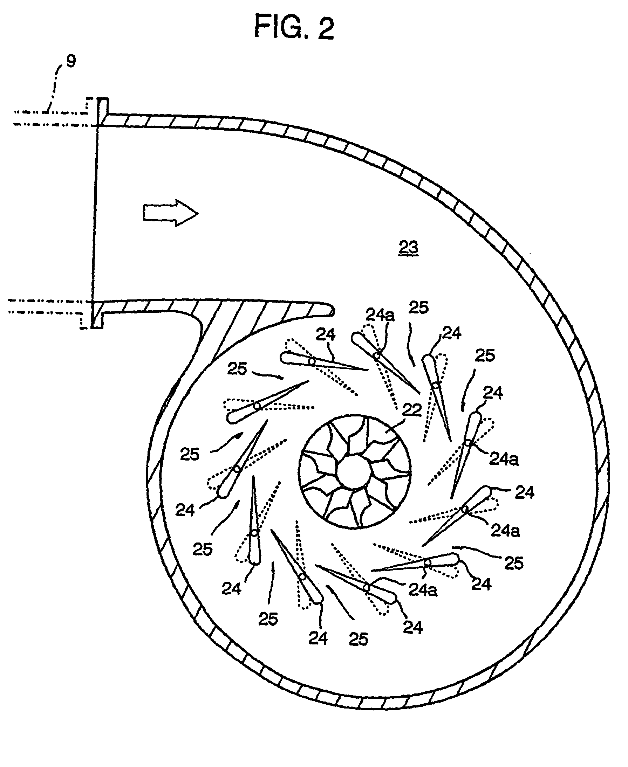

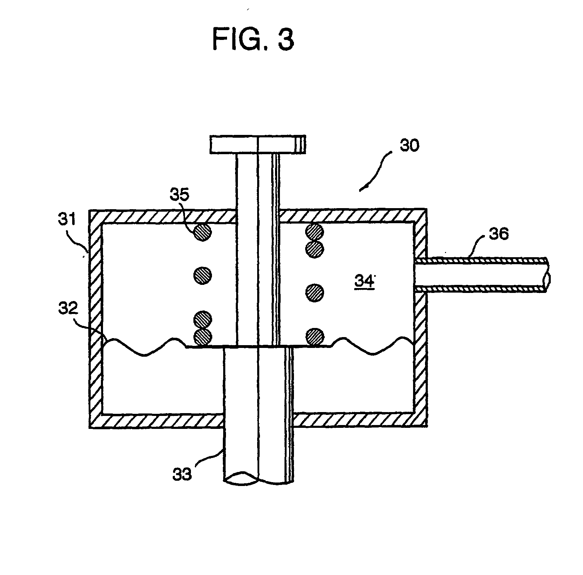

As shown in detail in Figure 2, the turbine 21 has a number of movable vanes 24 pivotally mounted on vane shafts 24a which are arranged so as to surround the turbine wheel 22 in a turbine chamber 23 into which an exhaust gas stream enter through a turbine inlet (not shown) as indicated by an arrow. The turbine wheel 22 increases its turbine efficiency by reducing a nozzle area of each of variable-area nozzle 25 that are formed between respective adjacent movable vanes 24 and, on the other hand, increases its turbine efficiency by increasing the nozzle area of the nozzle 25. The movable vanes 24 are driven by the vacuum operated actuator 30 to change their angles with respect to the turbine wheel 22. As shown in detail in Figure 3, the vacuum operated actuator 30 has a diaphragm 32 by which the interior of an actuator housing 31 is formed with a vacuum chamber 34, an actuator rod 33 which is fixedly connected at one of its opposite ends to the diaphragm 32, and a coil spring 35 disposed in the vacuum chamber 34 so as to surround the actuator rod 33. The actuator rod 33 at another end is connected to the respective movable vanes 24 through a link mechanism (not shown). The vacuum operated actuator 30 operates such that, when a negative pressure in the vacuum chamber 34 is low (which indicates that the absolute level of negative pressure is low), the actuator rod 33 is forced by the coil spring 35 to protrude partly out of the actuator housing 31, so as to drive the movable vanes 24 of the turbine wheel 22 in one of opposite directions through the link mechanism, thereby increasing the nozzle area of the nozzle 25 and, on the other hand, when the negative pressure in the vacuum chamber 34 is high (which indicates that the absolute level of negative pressure is high), the actuator rod 33 is forced by the diaphragm 32 to retract into the actuator housing 31 against the coil spring 35, so as to drive the movable vanes 24 of the turbine wheel 22 in another direction through the link mechanism, thereby reducing the nozzle area of the nozzle 25.

Referring back to Figure 1, a negative pressure (VGT negative pressure) passage 36 extends from the vacuum chamber 34 of the vacuum operated actuator 30 and leads to a duty solenoid valve (VGT duty solenoid valve) 37. The duty solenoid valve 37 is energized to generate a negative pressure as a VGT negative pressure according to duty ratios from a negative pressure supplied by an engine operated vacuum pump 38 through a first negative pressure passage 39 and an atmospheric pressure supplied through a first atmospheric pressure passage 40 and directs the VGT negative pressure to the vacuum chamber 34 of the vacuum operated actuator 30 through the VGT negative pressure passage 36. When the VGT duty valve 37 is energized with a duty ratio of 0%, it provides a negative pressure admission ratio of 0% and an atmospheric pressure admission ratio of 100% so as to force the actuator rod 33 to protrude as much as possible, thereby increasing the nozzle area of the turbine wheel 22 as large as possible. On the other hand, when the VGT duty valve 37 is energized with a duty ratio of 100%, it provides a negative pressure admission ratio of 100% and an atmospheric pressure admission ratio of 0% so as to force the actuator rod 33 back to retract as much as possible, thereby reducing the nozzle area of the turbine wheel 22 as small as possible. Further, when the VGT duty valve 37 is energized with a duty ratio variable between 0% and 100%, so as to regulate linearly and precisely the turbine efficiency. The first negative pressure passage 39 is equipped with a negative pressure tank 15 operative to restrain fluctuations in negative pressure that is generated by the engine operated vacuum pump 38. The term "negative pressure admission ratio" as used herein shall means and refer to a ratio of negative pressure that is admitted to the VGT negative pressure passage 36 from the first negative pressure passage 39, and the term "atmospheric pressure admission ratio" as used herein shall means and refer to a ratio of atmospheric pressure that is admitted to the VGT negative pressure passage 36 from the first atmospheric pressure passage 40.

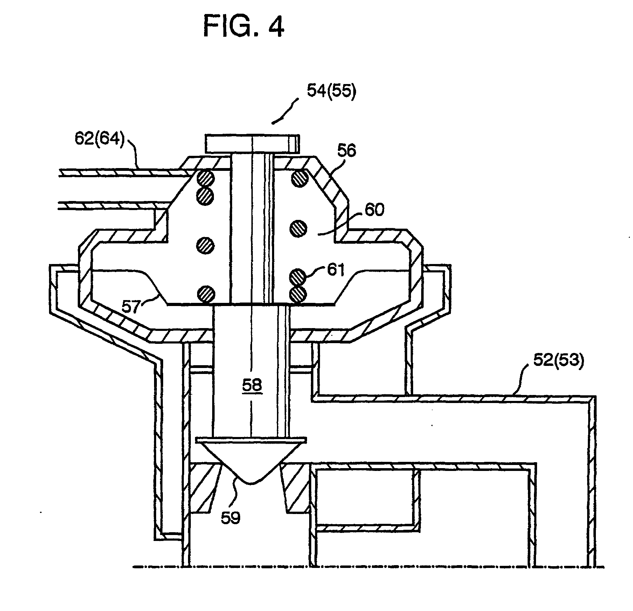

Provided between the intake air passage 7 and the exhaust gas passage 9 is an exhaust gas recirculation (EGR) passage 50 which extends from the exhaust gas passage 9 upstream from the turbine to the intake air passage 7 downstream from the blower 21 so as to admit partly exhaust gas into the intake air passage 7 from the exhaust gas passage 9 and supplies it into the combustion chambers of the diesel engine 1 and is provided with a cooler 51 operative to cool down the exhaust gas so as thereby to increase consistency of the exhaust gas. The EGR passage 50 at the downstream side from the cooler 51 branches off into two parts, namely first and second EGR branch passages 52 and 53 which are provided with first and second exhaust gas recirculation (EGR) valves 54 and 55, respectively, and joined together after the first and second EGR valves 54 and 55. The first and second EGR valves 54 and 55 are substantially same in structure as shown in Figure 4. Specifically, the EGR valve 54, 55 has a valve housing 56, a diaphragm 57 by which the interior of the valve housing 56 is formed with a vacuum chamber 60, a valve stem 58 which is fixedly connected at one of its opposite ends to the diaphragm 57, a valve body 59 extending into the EGR branch passage 52, 53, and a coil spring 61 disposed in the vacuum chamber 60 so as to surround the valve stem 58. The EGR valve 54, 55 operates such that, when a negative pressure in the vacuum chamber 60 is low (which indicates that the absolute level of negative pressure is low), the valve stem 58 is forced by the coil spring 61 to protrude partly out of the valve housing 56, so as to force the valve body 59 to enter the EGR branch passage 52, 53 and shut off it and, on the other hand, when the negative pressure in the vacuum chamber 60 is high (which indicates that the absolute level of negative pressure is high), the valve stem 58 is forced by the diaphragm 57 to retract into the valve housing 56 against the coil spring 61, so as to force the valve body 59 back to escape from the EGR branch passage 52,53 and open it.

A first negative pressure passage 62 extending from the vacuum chamber 60 of the first EGR valve 54 leads to a duty solenoid valve 63, and a second negative pressure passage 64 extending from the vacuum chamber 60 of the second EGR valve 55 leads to an on-off solenoid valve 65. A negative pressure regulation duty solenoid valve 67 is supplied with a negative pressure generated by the engine operated vacuum pump 38 through a second negative pressure passage 66, and a atmospheric pressure regulation duty solenoid valve 69 is supplied with atmospheric pressure through a second atmospheric pressure passage 68. Negative pressure that is pre-regulated by the atmospheric pressure regulation duty solenoid valve 69 is supplied to the duty solenoid valve 63 through a negative pressure passage 70. The duty solenoid valve 63, which is of a three-way type, provides a negative pressure admission ratio of 0% between the first negative pressure passage 62 and the negative pressure passage 70 and opens the first negative pressure passage 62 to the atmosphere when it is energized with a duty ratio of 0% so as to force the valve stem 58 of the first exhaust gas recirculation valve 54 to protrude as much as possible, thereby completely closing the first EGR branch passage 52., On the other hand, when the duty solenoid valve 63 is energized with a duty ratio of 100%, it provides a negative pressure admission ratio of 100% between the first negative pressure passage 62 and the negative pressure passage 70 so as to force the valve stem 58 of the first exhaust gas recirculation valve 54 back to retract as much as possible, thereby completely opening the first EGR branch passage 52. Further, when the duty solenoid valve 63 is energized with a duty ratio variable between 0% and 100%, so as to regulate linearly and precisely the admission ratio, and hence the amount of exhaust gas that is recirculated Negative pressure generated by the engine operated vacuum pump 38 is directly supplied to the on-off solenoid valve 65 through a negative pressure passage 71 branching off from the second negative pressure passage 66 without being pre-regulated by the duty solenoid valves 67 and 69. When the on-off solenoid valve 65, which is of a three-way type, is off, it provides a negative pressure admission ratio of 0% and opens the second negative pressure passage to the atmosphere so as to force the valve stem 58 of the second exhaust gas recirculation valve 55, thereby completely closing the second EGR branch passage 53. On the other hand, when the on-off solenoid valve 65 is on, it provides a negative pressure admission ratio of 100% between the second negative pressure passage 64 and the negative pressure passage 71 so as to force the valve stem 58 of the first exhaust gas recirculation valve 54 back to retract as much as possible, thereby completely opening the second EGR branch passage 53. Owing to the arrangement of the first and second exhaust gas recirculation valves 54 and 55 having different operational characteristics in parallel to each other in the EGR passage 50, it is enabled that the amount of exhaust gas that is recirculated is, on one hand, regulated quickly with a high response over a wide range by the second exhaust gas recirculation valve 55 and, on the other hand, regulated finely with high preciseness and high resolution by the first exhaust gas recirculation valve 54. As described above, exhaust gas is easily recirculated into the intake air passage 7 through the exhaust ga recirculation passage 50 by reducing the nozzle area of the variable geometry turbocharger 20. This is because, since the exhaust gas recirculation passage 50 at its upstream end opens to the exhaust gas passage 9 upstream from the movable vanes 24, and hence the nozzle 25, or a position where the turbine wheel 22 is located, reducing the nozzle area of the nozzle 25 of the variable geometry turbocharger 20 causes resistance against an exhaust gas stream in the exhaust gas passage 9. Accordingly, even when the first and second exhaust gas recirculation valves 54 and 55 are at the same valve lifts, the amount of exhaust gas that is admitted tends to increase more for smaller a nozzle area as compared with a large nozzle area.

The diesel engine 1 is controlled by a control unit 100 which performs, besides fuel injection control for regulating an amount of fuel that is sprayed into the combustion chamber or the pre-combustion chamber 5 through the fuel injector 4 and a fuel injection timing according to engine operating conditions., at least supercharging pressure control (VGT control) through the duty solenoid valve (VGT duty valve) 37 and exhaust gas recirculation control through the duty solenoid valve 63, on-off solenoid valve 65, negative pressure regulation duty solenoid valve 67 and atmospheric pressure regulation duty solenoid valve 69. The supercharging pressure control and exhaust gas recirculation control are implemented on the basis of parameters represented by signals from various sensors. In this regards, the control unit 100 receives signals including at least a signal representative of a pressure of intake air (supercharging pressure) that is detected by a pressure sensor 81 disposed in the intake air passage 7, a signal representative of temperature of intake air that is detected by a temperature sensor 82 disposed in the intake air passage 7, a signal representative of a negative pressure supplied to the upper vacuum chamber 34a of the vacuum operated actuator 30 that is detected by a pressure sensor 83 disposed in the negative pressure passage 37, a signal representative ofa valve lift ofthe first exhaust gas recirculation valve 54, and hence an opening of the first EGR branch passage 52, that is detected by a valve lift sensor 84, a signal representative of a temperature of engine cooling water that is detected by a temperature sensor 85, a signal representative of an engine speed that is detected as rotational angle of a crankshaft of the diesel engine 1 by an electromagnetic type of speed sensor 86, a signal representative of a travel of an accelerator pedal (not shown) that is detected by a travel sensor or a position sensor 87, a signal representative of a temperature of an engine compartment that is detected by a temperature sensor 88, and a signal representative of an atmospheric pressure that is detected by a pressure sensor 89.

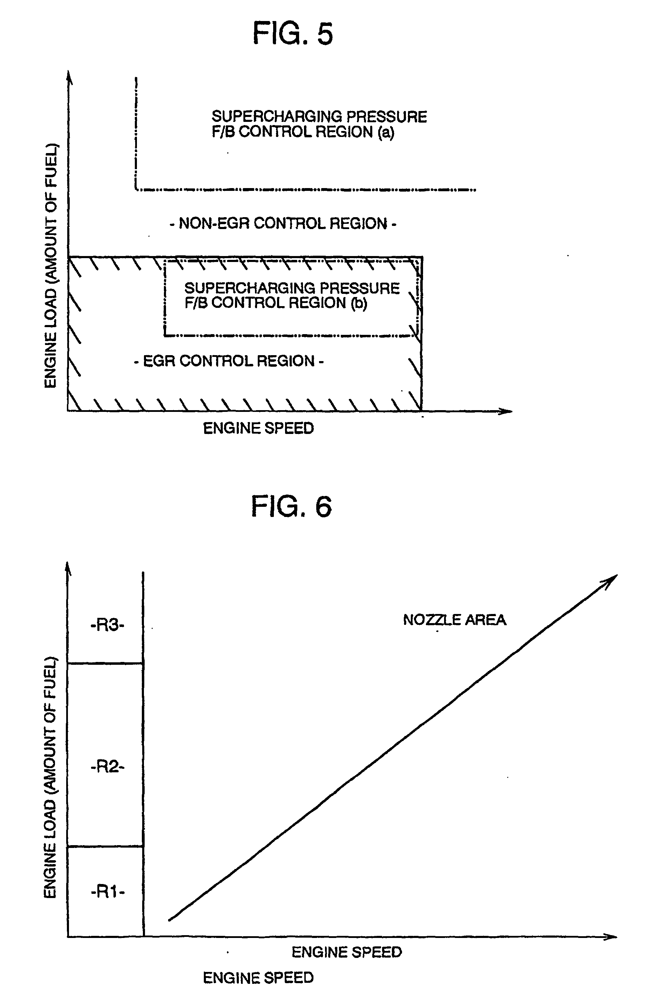

The exhaust gas recirculation control is implemented in an ordinary engine operating region from a state where the engine operates with lower speeds and lower loads (smaller amounts of fuel) to a state where the engine operates with moderate speeds and moderate loads (moderate amounts of fuel) as shown as exhaust gas recirculation (EGR) control region in Figure 5. The exhaust gas recirculation control is of feedback control which controls an amount of exhaust gas recirculation by bringing a practical valve lift of the first exhaust gas recirculation valve 54 that is detected by the valve lift sensor 84 to a target valve lift. However, the exhaust gas recirculation control is suspended in an accelerative engine operating region where the engine operates with higher speeds and higher loads as shown as an exhaust gas recirculation suspension (non-EGR) region in Figure 5. This is because, during engine acceleration, it is necessary to increase quickly the amount of intake air with an increase in the amount of fuel injection and, as a matter of course, it is necessary to decrease quickly the amount of exhaust gas that is admitted by suspending the exhaust gas recirculation control. In this instance, the exhaust gas recirculation control is suspended also during decelerative engine operating region.

In the VGT control, as shown in Figure 6, in order to provide more satisfactory accelerative performance with an increase in engine speed or engine load (an amount of fuel injection) , the duty ratio with which the VGT duty solenoid valve 37 is basically increased so as to provide a reduced nozzle area of the nozzle 25, thereby providing a rise in supercharging efficiency of the variable geometry turbocharger 20. However, as indicated by reference signs R1, R2 and R3 in Figure 6, in an engine operating region of lower speeds, the duty ratio is decreased with an increase in engine load so as to provide an increased nozzle area of the nozzle 25. That is, the VGT duty solenoid valve 37 is energized, for example, with a duty ratio of 100% so as to provide the possibly smallest nozzle area in the engine operating region of lower engine speeds and lower engine loads (R1) including idling conditions, a duty ratio of 50% so as to provide a middle size nozzle area in a moderate engine operating region of lower engine speeds and moderate engine loads (R2), and a duty ratio of 0% so as to provide the possibly greatest nozzle area in the engine operating region of lower engine speeds and higher engine loads (R3). With the variable geometry turbocharger control, while the exhaust gas is partly recirculated through the exhaust gas recirculation valve 54, 55 in the engine operating region of lower engine speeds and lower engine loads (R1), the variable geometry turbocharger 20 reduces the nozzle area of the nozzle 25 with an effect of causing resistance against an exhaust gas stream, so as to make the exhaust gas in the exhaust gas passage 9 hard to be expelled downstream, thereby rising the pressure of exhaust gas in the exhaust gas passage 9 between the exhaust ports of the diesel engine 1 and the movable vanes 24 or the nozzle 25 of the variable geometry turbocharger 20 or the position where the turbine wheel 22 is located. As a result, propulsion force for circulating the exhaust gas into the intake air passage 7 through the EGR passage 50 is risen, so that a desired amount of exhaust gas recirculation is ensured by the use of the variable geometry turbocharger 20 without providing the diesel engine 1 with, for example, a separate throttling element such as a throttle valve operative to generate a negative pressure in the intake air passage 7. Since a small amount of exhaust gas is discharged in the engine operating region of lower engine speeds and lower engine loads (R1), the variable geometry turbine 21 does not permit the turbine wheel 22 to overspeed even when reducing the nozzle area of the nozzle 25, so as to prevent itself from increasing its supercharging efficiency in excess. While the diesel engine 1 operates in the engine operating region of lower engine speeds and higher engine loads (R3), the variable geometry turbine 21 increases the nozzle area of the nozzle 25. Accordingly, when an engine operation changes to the engine operating region of lower engine speeds and higher engine loads (R3) from the engine operating region of lower engine speeds and lower engine loads (R1) due to stepping down the accelerator pedal on a vehicle start, the nozzle 25 open from their closed positions, as result of which the exhaust gas tends to be expelled easily downstream in the intake air passage 9, the turbine 29 is prevented from increasing its rotational speed quickly, so as thereby to eliminate the possibility that the turbine wheel 22 overspeeds and the turbine shaft 22a seizes and, in consequence, guarantee the reliability of the variable geometry turbocharger 20. In a short period of time at the beginning of stepping down the accelerator pedal on a vehicle start, although the nozzle 25 are not completely changed from a closed state to an open state, an increased amount of exhaust gas is recirculated and works as initial driving force for causing a rise in rotational speed of the turbine wheel 22, so that, since the nozzle 25 subsequently open more greatly, the turbine wheel 22 rotates continuously with sufficiently large inertia even though the driving force acting on the turbine is not increased so much and, in consequence. This prevents an occurrence of significant aggravation of accelerative performance of the diesel engine 1. In particular, an ensured amount of exhaust gas is recirculated in the engine operating region of lower engine speeds and lower engine loads (R1), i.e. idling conditions that occur so often, and reliable operation of the variable geometry turbocharger 20 is guaranteed in engine operating conditions such as vehicle starts from idling conditions that occur so often, both of which yield significantly desirable effects.

Further, in the moderate engine operating region of lower engine speeds and moderate engine loads (R2), the variable geomety turbocharger 20 opens the nozzle 25 to a nozzle area between those that are provided in the engine operating region oflower engine speeds and lower engine loads (R1) and in the engine operating region of lower engine speeds and higher engine loads (R3), respectively. Accordingly, on the way of change in engine operating condition from the engine operating region of lower engine speeds and lower engine loads (R1) to the engine operating region of lower engine speeds and higher engine loads (R3) following a vehicle start, the nozzle 25 change in nozzle area via a middle size nozzle area, so that the nozzle 25 increase their area in steps with an effect of mitigating a sharp change in nozzle area from their closed state to open state at one stretch. As a result, an increasing rate of driving force acting on the turbine wheel 22 is lowered in steps, so as to prevent or significantly reduce unpleasant feelings of drive. In this instance, although the engine operating region of lower engine speeds is divided into three regions (R1), (R2) and (R3) for lower, moderate and higher engine loads as shown in Figure 6, it may be divided into more than three regions of engine loads. The more the number of regions of engine loads into which the engine operating region of lower engine speeds is divided, the more gently the nozzle 25 increase their area on the way of change in engine operating condition from the engine operating region of lower engine speeds and lower engine loads (R1) to the engine operating region of lower engine speeds and higher engine loads (R3) following a vehicle start so that the nozzle 25 increase more gently from their closed state to open state. As a result, an increasing rate of driving force acting on the turbine wheel 22 is lowered smoothly, so as to prevent or more significantly reduce unpleasant feelings of drive

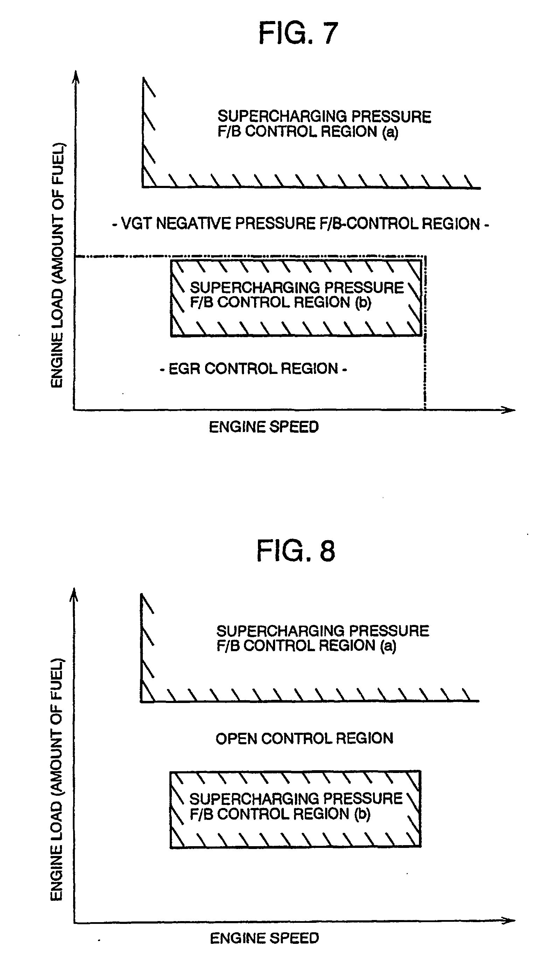

The supercharging pressure control is performed by feedback controlling a nozzle area of the nozzle 25 of the variable geometry turbocharger 20 so as to provide a target supercharging pressure according to engine operating conditions such as engine speeds and engine loads. In particular, as shown in Figure 7, feedback control of nozzle area is implemented so as to bring a practical supercharging pressure that is detected by the pressure sensor 81 to a target supercharging pressure in engine operating regions defined for supercharging pressure feedback control, namely an engine operating region of extremely higher engine loads (a) and an engine operating region of moderate engine speeds and moderate engine loads (b). This is because, since a target supercharging pressure is set to an extremely high level according to extremely high engine loads (extremely large amounts of fuel injection) in the engine operating region of extremely higher engine loads (a), if control of the variable geometry turbocharger 20 based on a practical supercharging pressure in the intake passage 7 is imprecise, the supercharging pressure becomes too high to prevent the turbine wheel 22 from overspeeding and/or the turbine shaft 22a from seizing due to an overspeed of the turbine wheel 22, which always yields aggravation of the reliability of the variable geometry turbocharger 20. Further, regarding the engine operating region of moderate engine speeds and moderate engine loads (b), since it is involved in an engine operating region for implementation of the exhaust gas recirculation (EGR) control region as shown by a double-dotted line in Figure 7, if control of the variable geometry turbocharger 20 based on a practical supercharging pressure in the intake passage 7 is imprecise, fluctuations occur in the amount of exhaust gas that is recirculated through the exhaust gas recirculation (EGR) passage 50, which makes it hard to feedback control the amount of exhaust gas recirculation and, in consequence, causes fluctuation in emission level of NOx.

On the other hand, in the remaining engine operating region of ordinary engine speeds including lower engine speeds for negative pressure feedback control for the variable geometry turbocharger 20 (VGT negative pressure feedback region), VGT negative pressure control is implemented, in place of the supercharging pressure control, by feedback controlling a nozzle area of the nozzle 25 of the variable geometry turbocharger 20 so as to bring a practical supercharging pressure that is detected by the pressure sensor 83 to a target supercharging pressure. This is because, although the supercharging pressure feedback control is superior in accuracy, it has a relatively large time lag until causing an increase or a decrease in practical supercharging pressure in the intake air passage 7 and is, in consequence, defective in responsiveness. The time lag is caused due to a change in turbine efficiency resulting from that the nozzle 25 is regulated by a change in negative pressure supplied to the vacuum chamber 34 of the vacuum operated actuator 30 on the basis of a duty ratio for the VGT duty solenoid valve 37 which is determined so as to cancel a pressure difference between the practical and target supercharging pressures. An occurrence of such a time lag is a matter of concern in an engine operating region of lower engine speeds where a small amount of exhaust gas is generated and, in consequence, an increase or a decrease in practical supercharging pressure tends to be slow. Besides, because the pressure difference between practical and target supercharging pressures is calculated on the basis of a practical supercharging pressure corresponding to a duty ratio that is generated for the VGT duty solenoid valve 37 a relatively long time ago, a feedback control value becomes too large, the control I apt to overshoot and cause hunting which is always undesirable for stable control. The supercharging pressure generated in the intake air passage 7 varies widely, due to which the control is apt to cause hunting. Since the unstableness of control causes fluctuations in engine output, it is especially a matter of concern in an ordinary engine operating region during stable cruising. On the other hand, although a direct target of the supercharging pressure control (VGT control) is the VGT duty solenoid valve 37 and the final result of the control is revealed as a supercharging pressure in the intake air passage 7, nevertheless, there is an inter relationship, though indirect, between a VGT negative pressure that the VGT duty solenoid valve 37 generates directly and a nozzle area of the nozzle 25 that varies with the VGT negative pressure or a supercharging pressure that the variable geometry turbocharger 20 generates. Accordingly, the variable geometry turbocharger 20 can be feedback controlled on the basis of the in place of the practical supercharging pressure in the intake air passage 7 which is the final result of the variable geometry turbocharger control, the VGT negative pressure that the VGT duty solenoid valve 37 generates directly in the negative pressure (VGT negative pressure) passage 36 in place of the practical supercharging pressure in the intake air passage 7 as the final result of the variable geometry turbocharger control. In this case, since that the VGT duty solenoid valve 37 generates directly the VGT negative pressure, there is no large time lag such as occurring in the supercharging pressure feedback control, besides variations in VGR negative pressure level is small as compared with those in supercharging pressure, so that defect in responsiveness and unstableness of the control are eliminated. On the grounds of the above, the VGT negative pressure control, which is inferior in preciseness but superior in responsiveness and stability, is implemented region in place of the supercharging pressure feedback control in the engine operating region of lower engine speeds and the ordinary engine operating.

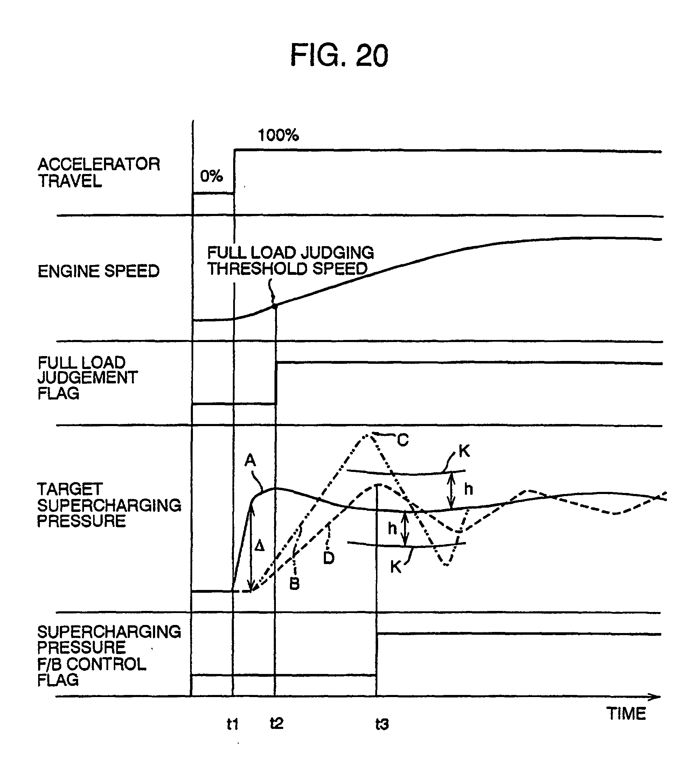

Which control is implemented between the supercharging pressure feedback control and the negative pressure feedback control depends upon control characteristics that engine operating condition requires and characteristics that the respective control is possessed of. Accordingly, in place of selectively implementing the two feedback control, it may be acceptable to implement both feedback control in, for example, the case where the characteristics of both or either one of the two feedback control are required. Otherwise, as shown as an open control region in Figure 8, in an engine operating region including the lower speed engine operating region and ordinary engine operating region but excluding the engine operating region of extremely higher engine loads (a) for the supercharging pressure feedback control where the VGT control is required to be performed with high preciseness and the engine operating region of moderate engine speeds and moderate engine loads (b) for the supercharging pressure feedback control which overlaps the engine operating region for the exhaust gas recirculation (EGR) control, open or feedforward control may be implemented in place of the feedback control. In the case where the open control is implemented, there possibly occurs a problem accompanying a switch in control mode of the variable geometry turbocharger 20 upon a transition of engine operating condition from the open control engine operating region to the feedback control engine operating region, more specifically upon a transition of engine operating condition to the feedback control region of higher and full engine loads (a) from an engine operating region of lower engine loads such as when a demand for acceleration which needs a harp increase in accelerator travel occurs. That is, the open control regulates a nozzle area of the nozzle of the variable geometry turbocharger 20 so as to develop a basic target supercharging pressure according to engine operating conditions such as engine speeds and engine loads, while feedback control regulates a nozzle area of the nozzle of the variable geometry turbocharger 20 so as to cancel a pressure difference between a practical and a target supercharging pressure. As shown by a solid line A in a time chart illustrated in Figure 20, a target supercharging pressure for the feedback control is calculated immediately at the beginning of an entry into the feedback control region of higher and full engine loads (a) from an engine operating region of lower engine loads as a result of stepping down the accelerator pedal for acceleration, while, as shown by a double dotted line B in Figure 32, a practical supercharging pressure rises slowly due to a response delay of the VGT control, as result of which a pressure difference ($\Delta$) between the practical and the target supercharging pressure at the beginning of implementation of the feedback control (t11) is considerably large. As a result; a feedback control value becomes large in excess in order to cancel the pressure difference, so that the practical supercharging pressure is apt to overshoot as shown by a reference sign C in Figure 23, as a result of which the turbine 21 overspeeds and the turbine shaft 22a possibly seizes, so as to cause aggravation of the reliability of the variable geometry turbocharger 20. Further, the feedback control is apt to cause hunting, so as to lose control stability and let the driver have an unpleasant driving feeling due to fluctuation in engine output even during acceleration. For this reason, the control is programmed and adapted such that the open control is left effective without switching to the feedback control immediately upon an entry into the feedback control region of higher and full engine loads (a) from from an engine operating region of lower engine loads, for example, during acceleration. With the open control, as shown by a broken line D in Figure 20, the feedback control is effected at a point of time (t13) at which the practical supercharging pressure reaches a level within a specified pressure difference (h) from the target supercharging pressure for the feedback control. As a result; as shown in Figure 23, when the accelerator pedal is stepped down at a point of time (t11) accompanying a sharp increase in accelerator opening, and as a result of which the diesel engine 1 attains a speed exceeding a specified threshold speed for a judgement of full load engine operating condition at a point of time (t12), the feedback control, which is performed on the basis of a supercharging pressure difference ($\Delta$), is not implemented at an entry into the feedback control engine operating region at the point of time (t11) even though the supercharging pressure difference ($\Delta$) is large, so as to prevent the practical supercharging pressure from overshooting and the control from hunting. Since the feedback control commences at the point of time (t13) at which the pressure difference ($\Delta$) falls within the specified pressure difference (h) between the target supercharging pressure for the feedback control and a threshold pressure (k) for a judgement of commencement of the feedback control, the feedback control value is prevented from becoming large in excess in order to cancel the pressure difference ($\Delta$) which is within the specified pressure difference (h) and relatively small, so as to prevent the practical supercharging pressure from overshooting and the control from hunting, which eliminates or significantly ease problems relating to aggravation of the reliability of the variable geometry turbocharger 20 and stability of the control and fluctuations in engine output. Though the open control remains effective for the period between the points of time (t11) and (t12), the nozzle 25 of the variable geometry turbocharger 20 may be controlled to open a little more rather in that period than ordinary so as to cause the practical supercharging pressure as shown by the broken line D to rise slowly a little, which prevents the practical supercharging pressure from overshooting the threshold pressure (k) for the judgement of commencement of the control and the turbine 21 from overspeeding and guarantees stabilization of the control. Governing such that the management that the control of the variable geometry turbocharger 20 is not switched to the feedback control immediately after a transition of engine operating condition to the engine operating region of extremely higher engine loads (a) or the engine operating region of moderate engine speeds and moderate engine loads (b) is nothing but restraining or easing the feedback control. As a technique for restraining the feedback control, it is acceptable to prohibit implementation of the feedback control, to void a feedback control value though the feedback control is allowed to be implemented, or to lower a control gain.

The control unit 100 further performs VGT negative pressure learning control while a temperature of the diesel engine 1 or the engine compartment is higher than a specified temperature and stable after warming-up during idling or while a negative pressure generated by the engine operated vacuum pump 38 is stable at a specified level due to stabilization of engine speed after idling-up. Specifically, incases where there are fluctuations in VGT negative pressure supplied to the vacuum operated actuator 30 even when the VGT duty solenoid valve 37 is energized with the same duty ratio because of an individual difference of the VGT duty solenoid valve 37, variable geometry type of turbocharger 20 is hard to develop a target supercharging pressure due to irregularity of controlled nozzle areas of the nozzle 25. In order to eliminate the problem, the duty ratio for the VGT duty solenoid valve 37 suitable for developing a given target supercharging pressure is determined in consideration with an error of a negative pressure that is generated by VGT duty solenoid valve 37 energized with a predetermined specific duty ratio from a standard negative pressure that is previously given. In such a case, if circumferential environments are not fixed during implementation o the VGT negative pressure learning control, the learned results are also irregular so as to lower learning accuracy. For this reason, the VGT negative pressure learning control is implemented only while an ambient temperature of the VGT duty solenoid valve 37 such as temperature of the diesel engine 1 or the engine compartment is substantially fixed and unchangeable and the VGT duty solenoid valve 37 is electrically stable or while a negative pressure that is generated as a source negative pressure of a VGT negative pressure by the engine operated vacuum pump 38 is stable. Further, since the VGT duty solenoid valve 37 energized with a given duty ratio regardless of engine operating conditions, it generates a supercharging pressure unrelated the engine operating conditions. Accordingly, in order to lower an unpleasant feeling of the driver, the VGT negative pressure learning control is implemented only during idling where a small amount of exhaust gas is discharged and a supercharging pressure is low and less influential.

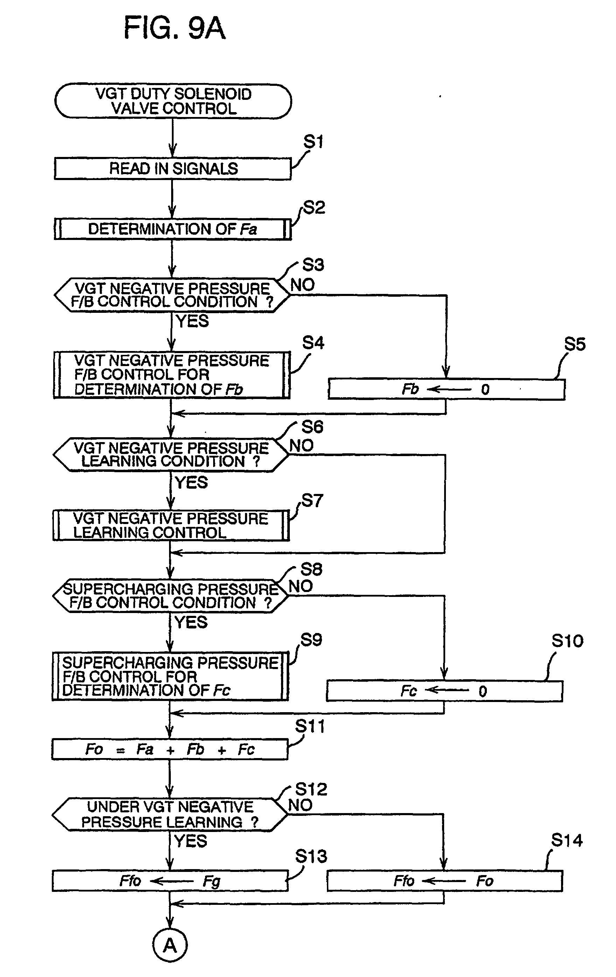

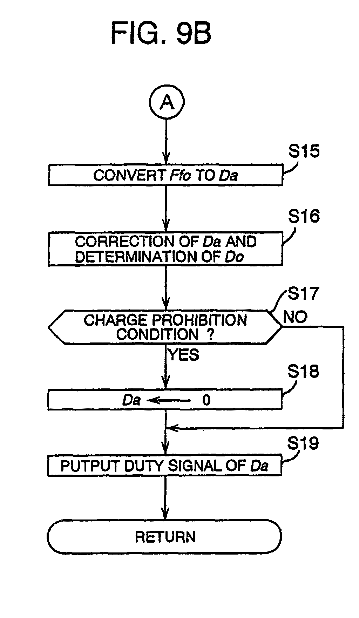

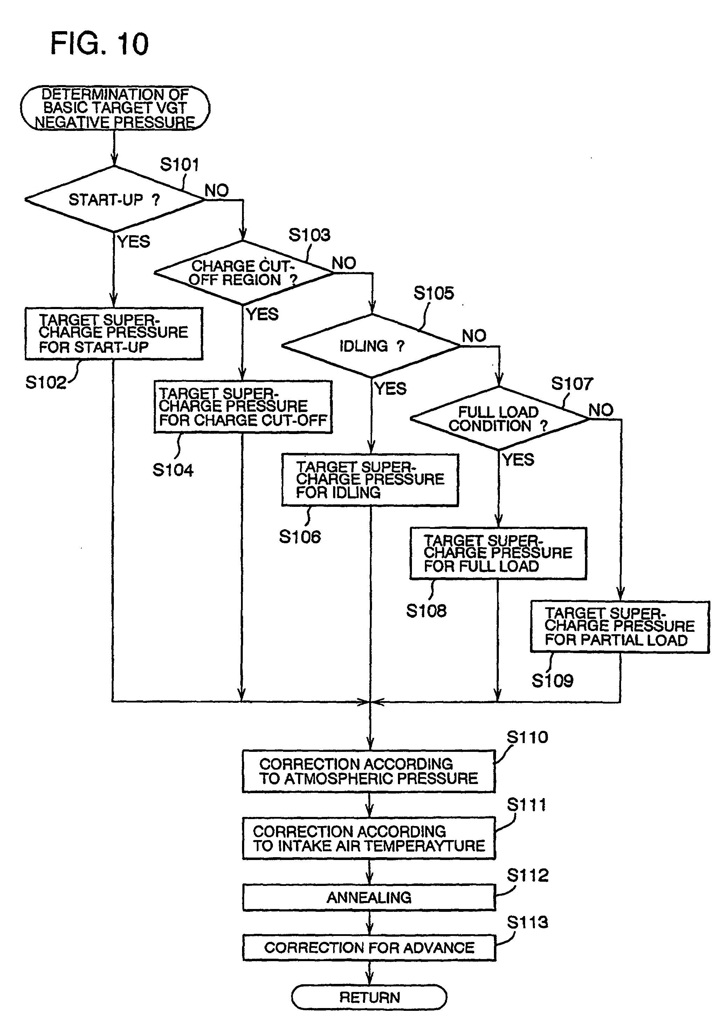

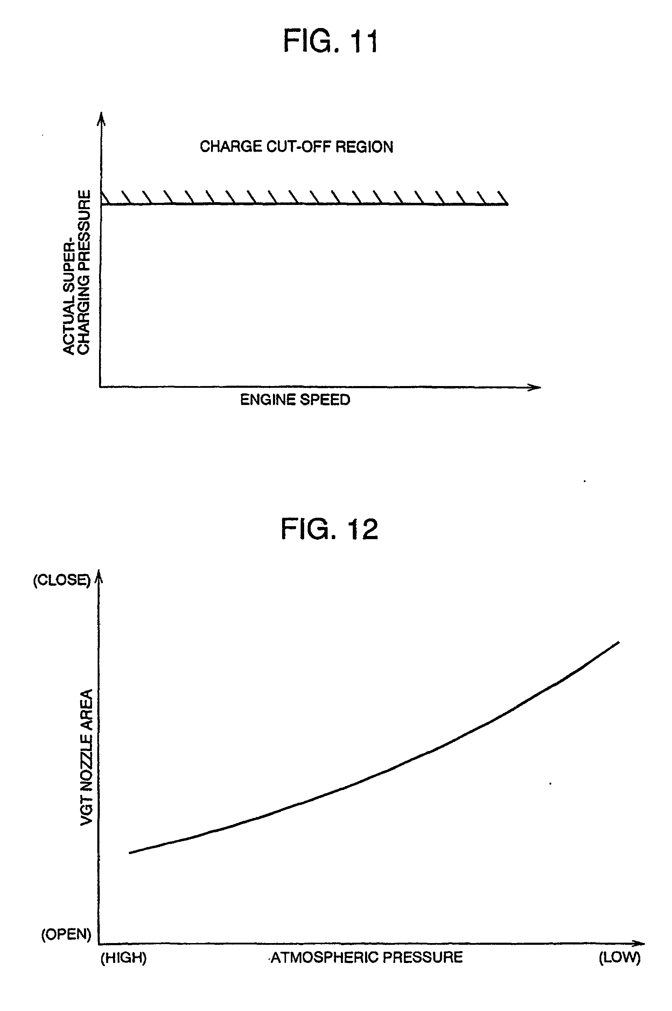

Figures 9A and 9B are respective parts of a flow chart illustrating a main routine of control of the VGT duty solenoid valve 37. When the sequence logic commence, after reading in signals from the various sensors at step S1, a basic target VGT negative pressure *Fa*, that is supplied to the vacuum chamber 34 of the vacuum operated actuator 30, is determined at step S2. Determination of the basic target VGT negative pressure *Fa* is performed by a subroutine illustrated by a flow chart shown in Figure 10. When the basic target VGT negative pressure determination subroutine is called for, basic target negative pressures are determined for various engine operating conditions through steps 101 to 109. The term "charge cut-off region" as used in the basic target VGT negative pressure determination subroutine shall mean and refer to a engine operating region in which a supercharging pressure in the intake air passage 7 is extremely high regardless of engine speeds as shown in Figure 11 and wherein the variable geometry turbocharger 20 definitely suspends generation of a supercharging pressure as long as the supercharging pressure is in the charge cut-off region.

Referring now to Figure 10 which is a flow chart illustrating a subroutine of the basic target VGT negative pressure determination control. When the engine 1 starts up at step S101, a start up target negative pressure is determined at step S102. When a supercharging pressure is in the charge cut-off region at step S103, a charge cut-off target negative pressure is determined at step S104. A VGT negative pressure that causes the nozzle 25 of the variable geometry turbocharger 20 to open to its full position is employed for the start up target negative pressure and the charge cut-off target negative pressure. When the engine 1 is idling at step S105, an idling target negative pressure is determined at step S106. A VGT negative pressure that causes the nozzle 25 of the variable geometry turbocharger 20 to close to its full close position is employed for the idling target negative pressure. When the engine 1 operates with a full load S107, a full load target negative pressure is determined at step S108. A VGT negative pressure that causes the nozzle 25 of the variable geometry turbocharger 20 to close to its full close position is employed for the full load target negative pressure. When the engine is in an engine operating conditions other than the above conditions, i.e. operates with partial loads, at step S107, a partial load target negative pressure is determined at step S109. A VGT negative pressure that causes the nozzle 25 of the variable geometry turbocharger 20 to open to some extent is employed for the partial load target negative pressure. Because employing the target negative pressures according to engine operating conditions, a given amount of exhaust gas that is recirculated is ensured in the exhaust gas recirculation (EGR) control region of lower engine speeds and lower engine loads with an effect of smoothly controlling an air-fuel ratio. Moreover, besides aggravation of the reliability of the variable geometry turbocharger 20 at a vehicle start is eliminated, an unpleasant feeling is eased.

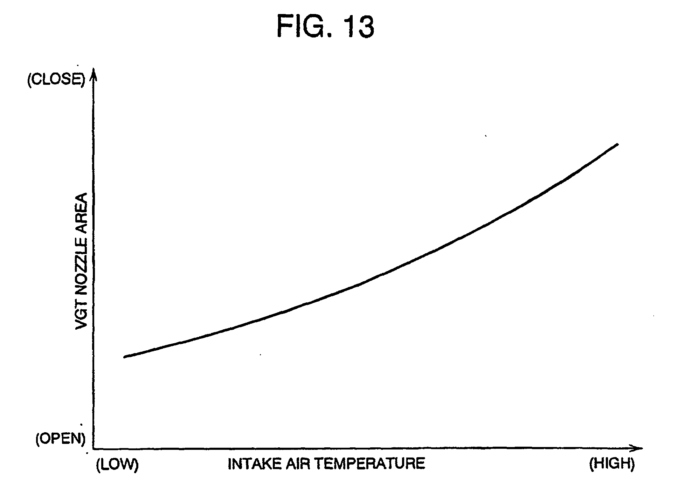

After the determination of a target negative pressure, the basic target negative pressure is corrected according to an atmospheric pressure at step S110. The basic target negative pressure correction is carried out by changing a nozzle area smaller so as to increase an amount of air that is supplied tot he combustion chamber such that the lower the atmospheric pressure is, the more the amount of air increases, such as shown in Figure 12. Subsequently, the basic target negative pressure is further corrected according to temperatures of intake air at step S111. The basic target negative pressure correction is carried out by changing a nozzle area larger so as to increase an amount of air that is supplied tot he combustion chamber such that the higher the intake air temperature is, the more the amount of air increases such as shown in Figure 13. After the corrections of the basic target negative pressure at steps S110 and S111, the basic target negative pressure *is annealed* in consideration with its past record in order to restrain a sharp change in the basic target negative pressure. The *annealing treatment* is performed by the following expression:

$$FU1 = K1 \times FU1(i-1) + (1-K1) \times FU0(i)$$

where

   *FU1* is the latest target negative pressure after *annealing treatment*;
   *FU(i-1)* is the last e target negative pressure after *annealing treatment*;
   *FU0* is the latest target negative pressure before *annealing treatment*, *i.e.* the basic target negative pressure after the atmospheric pressure and temperature correction;

$K1$ is a coefficient between 0.5 and 1

Finally, the target negative pressure is corrected for **_advancing_** at step S113. The **_annealing correction_** is conducted to determine a basic target VGT negative pressure $Fa$ with the aim to restrain or ease a response delay of a change in a supercharging pressure and performed by the following expression:

$$FU2 = [FU1(i) - K2 \times FU1(i-1)]/(1-K2)$$

where

$FU2$ is the latest target negative pressure after **_advancing correction_**;
$FU1(i)$ is the latest target e negative pressure after **_annealing treatment_**;
$FU0(i-1)$ is the last target negative pressure after **_annealing treatment_**;
$K2$ is a coefficient between 0 and 0.5

Then, the final step orders return to the main routine, after the step in the main routine calling for the basic target VGT negative pressure determination subroutine.

Referring back to the main routine in Figure 9A, a decision is made at step S3 as to whether a condition for implementation of the VGT negative pressure feedback control (VGT negative pressure control condition) is satisfied. When the VGT negative pressure control condition is satisfied, a subroutine of the VGT negative pressure feedback control is called for to determine a VGT feedback control value (a VGT feedback negative pressure $Fb$) at step S4. On the other hand, when the VGT negative pressure control condition is still unsatisfied, the VGT feedback negative pressure $Fb$ is set to a value of zero (0) at step S5. The VGT negative pressure control condition is, for example, such that an engine operating condition falls in the VGT negative pressure feedback region shown in Figure 7 and changing rates of both basic target negative pressure $Fa$ and practical VGT negative pressure are small.

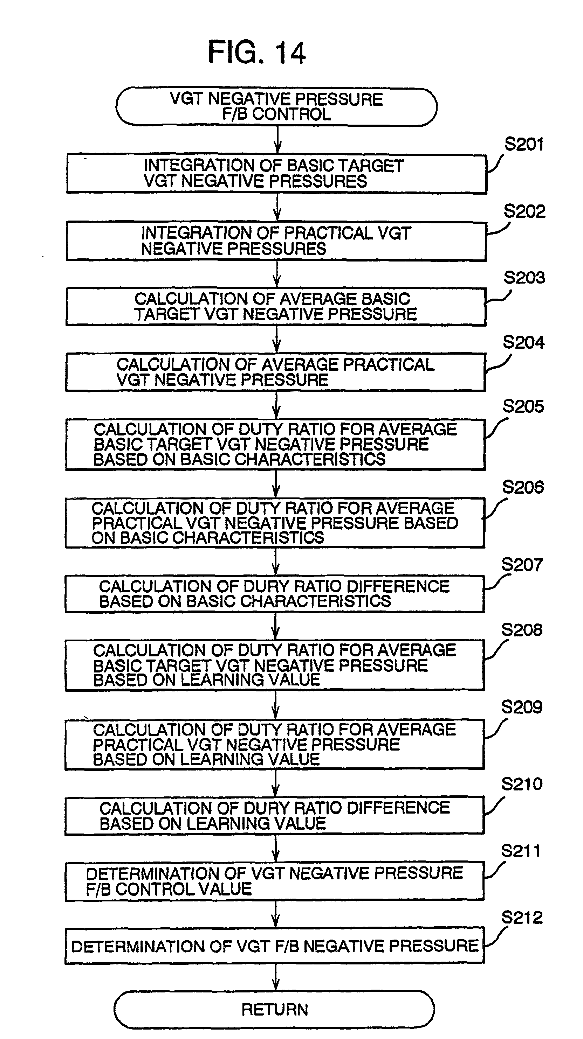

Referring now to Figure 14 which is a flow chart illustrating a subroutine of the VGT negative pressure feedback control, after integrating the basic target VGT negative pressures determined up to the latest control cycle and the practical VGT negative pressures detected up to the latest control cycle at steps S201 and S202, respectively, an average basic target VGT negative pressure and an average practical VGT negative pressure are calculated at step S403 and S404, respectively. That is to say, by means of integration ofboth basic target VGT negative pressure and practical VGT negative pressures, the feedback control value is prevented from sharply varying with an effect of stabilizing the VGT control. Subsequently, duty ratios are calculated using the average basic target VGT negative pressure and the average practical VGT negative pressure, respectively, on the basis of basic characteristics as a standard for the VGT negative pressure learning control at steps S205 and S206, respectively. Accordingly, the duty ratios that are calculated at steps S205 and S206 have not incorporated a variation in VGT negative pressure due to an individual variation of the VGT duty solenoid valve 37. Subsequently, a difference between the duty ratios (a duty ratio difference on the basis of the basic characteristic) is calculated at step S207, and duty ratios are calculated from the average basic target VGT negative pressure and average practical VGT negative pressure, respectively, on the basis of learning values at step S208 and S209, respectively. The term "learning value" as used herein shall mean and refer to a leaning correction value (a difference from a basic VGT negative pressure that is predetermined). Accordingly, the duty ratios that are calculated at steps S208 and S2069have incorporated a variation in VGT negative pressure due to an individual variation of the VGT duty solenoid valve 37. Subsequently, after calculating a difference between the duty ratios (a duty ratio difference on the basis of learning value) at step S210, a VGT negative pressure feedback control value is determined on the basis of the duty ratio differences on the basis of basic characteristic and the duty ratio difference on the basis of the learning value at step S211. Finally, at step S212, a VGT feedback negative pressure $Fb$ is determine by reflecting a past record in the VGT feedback negative pressure in order to prevent a sharp change in the VGT negative pressure feedback control value. The VGT feedback negative pressure $Fb$ is given by the following expression:

$$FBS(i) = FBS(i-1) + K3 \times FB$$

where

$FBS(i)$ is the latest VGT feedback negative pressure $Fb$;
$FBS(i-1)$ is the last VGT feedback negative pressure $Fb$;
$FB$ is the VGT negative pressure feedback control value;
$K3$ is a coefficient between 0 and 0.5

Then, the final step orders return to the main routine, after the step in the main routine calling for the VGT negative pressure feedback control subroutine.

Referring back to the main routine in Figure 9A, a decision is made at step S6 as to whether a condition for implementation of the VGT negative pressure learning control (VGT negative pressure learning condition) is satisfied. When the VGT negative pressure learning condition is satisfied, a subroutine of the VGT negative pressure learning control is called for at step S7. The VGT negative pressure learning condition is, for example, such that the engine 1 is idling for a specified period of time, the engine cooling water is at a temperature higher than a specified temperature, the atmospheric pressure is at a fixed standard, and the engine compartment is at a temperature higher than a specified temperature. When the VGT negative pressure learning condition is satisfied, the VGT negative pressure learning control is implemented in a state where a high learning accuracy is ensured owing to stable electrical characteristics of the VGT duty solenoid valve 37 and stable negative pressure that is generated by the engine operated vacuum pump 38 and in a state where the driver has no unpleasant driving feeling because of less fluctuation in engine output as well.

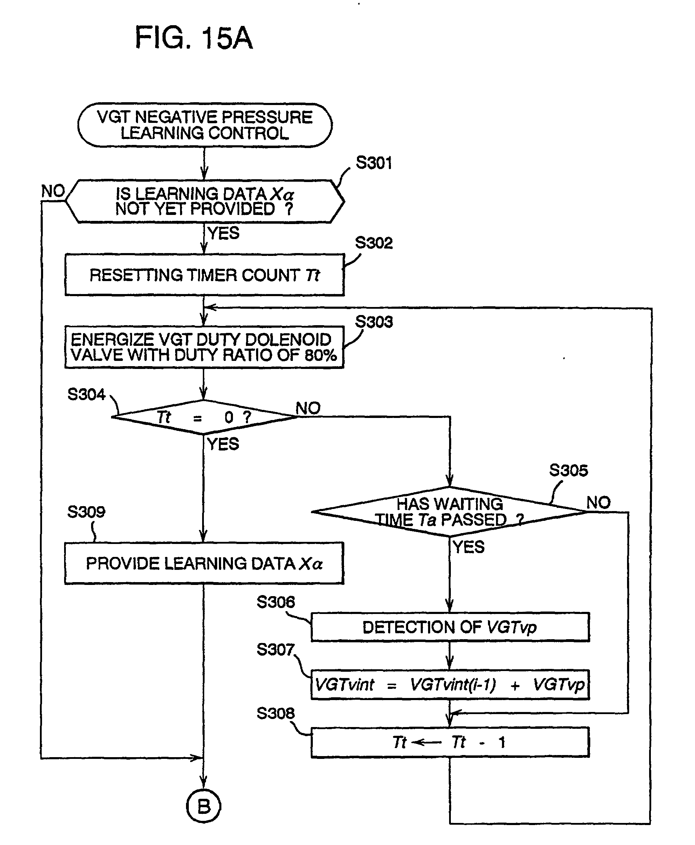

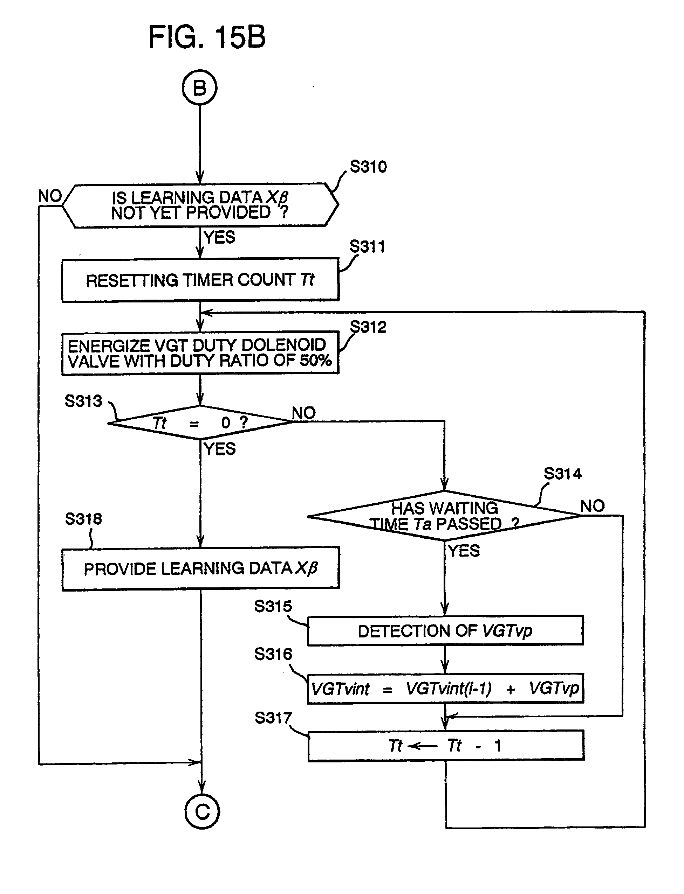

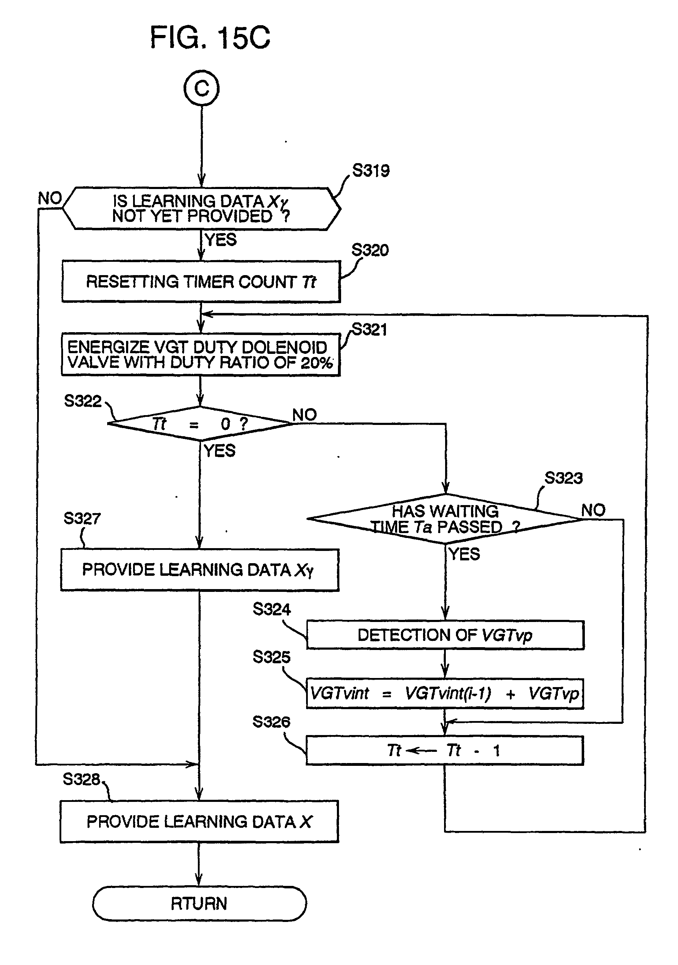

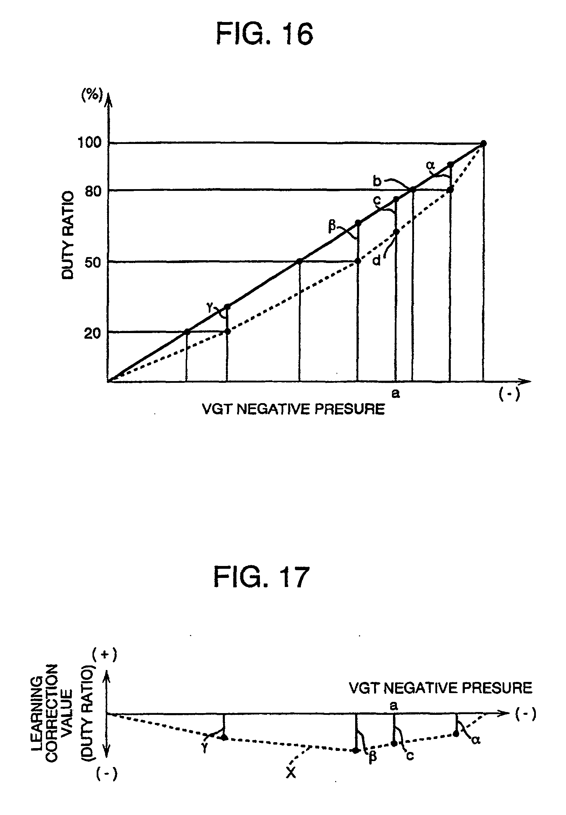

Figures 15A to 15C are a flow chart illustrating a subroutine of the VGT negative pressure learning control. In the VGT negative pressure learning control, specific learning duty rates of, for example 80%, 50% and 20% are preselected as shown in Figure 16. Learning is implemented with respect to the respective duty ratios through steps S301 to S309, steps S310 to S318 and steps S319 to S327, respectively, to obtain learning values $\alpha$, $\beta$ and $\gamma$, and then, learning data X over possibly available duty ratios is drawn up by interpolating each adjacent learning values as shown by a broken line in Figure 17 at step S328. The learning duty ratios are not limited to the above values and may be of, for example, 100%, 50% and 12.5%.

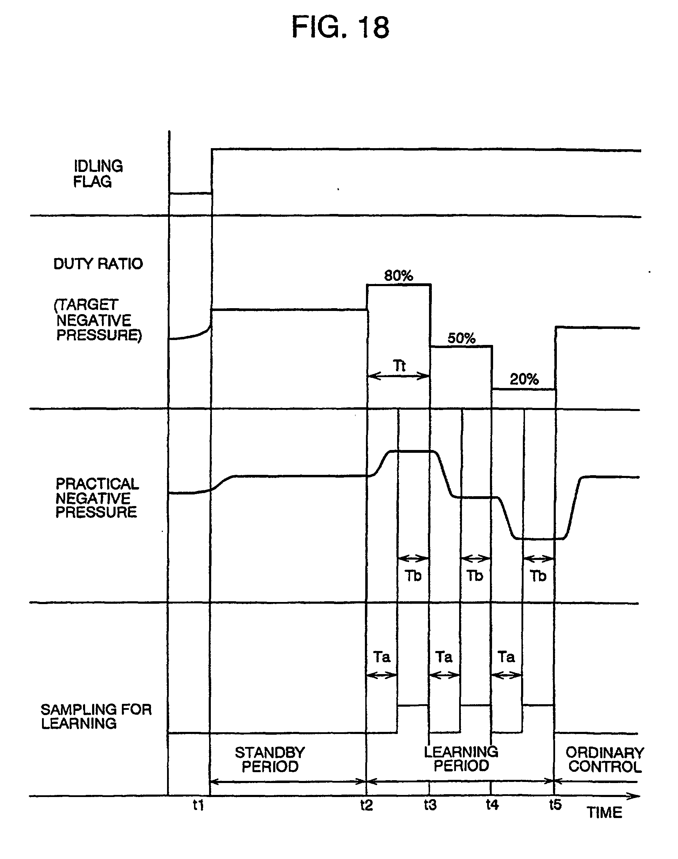

As shown in a time chart in Figure 18, the VGT negative pressure learning control holds itself in readiness for a specified standby period of time until a point of time (t2) even when the engine is detected to be in an idling condition at a point of time (t1). The standby period is necessary for the engine 1 to satisfy the VGT negative pressure learning condition that the specified period of time has passed from an entering an idling condition, the engine cooling water is at a temperature higher than the specified temperature, and the engine compartment is at a temperature higher than the specified temperature. After a lapse of the standby period, a decision is made at step S301 as to whether learning data $X\alpha$ relating to the learning duty ratio of 80% is not yet provided The learning data $X\alpha$ is provided on the basis of a learning value $\alpha$ at step S309. When learning data $X\alpha$ is still not yet prepared, after resetting a timer count $Tt$ to a preset time of, for example, four seconds at step S302, a duty signal is output to energize the VGT duty solenoid valve 37 with the learning duty ratio of 80% at step S303. Subsequently, a decision is made at step S304 as to whether the timer count $Tt$ has been counted down to 0 (zero), in other words, whether the VGT duty solenoid valve 37 is continuously applied with the duty signal for four seconds. When the timer count $Tt$ is not yet counted down to 0 (zero), a decision is made at step S305 as to whether a specified waiting time $Ta$ of, for example, two seconds has passed after outputting the duty signal. When the specified waiting time $Ta$ has passed, after detecting a VGT negative pressure $VGTvp$

in the VGT negative pressure passage 36 by the pressure sensor 83 at step S306, an integrated VGT negative pressure $VGTvint$ is calculated by adding the VGT negative pressure $VGTvp$ to the last integrated VGT negative pressure $VGTvint(i-I)$ at step S307. When the specified waiting time $Ta$ does not yet pass at step S305 or subsequently to the calculation of the integrated VGT negative pressure $VGTvint$ at step S307, after changing the timer count $Tt$ by a decrement of 1 (one) at step S308, the sequence logic return to step S303. When the timer count $Tt$ has been counted down to 0 (zero) at step S304, learning data $X\alpha$ is provided by calculating a difference of an average value of the integrated VGT negative pressure $VGTvint$ from the basic VGT negative pressure $VGTvbase$ at step S309. The reason why the detection of a VGT negative pressure $VGTvp$ in the $VGT$ negative pressure passage 36 is made not immediately after outputting the duty signal at step S302 but within a period of time Tb (see Figure 18) until the preset time count $Tt$ has passed from after a lapse of the specified waiting time $Ta$ is that, as shown in Figure 18, the VGT duty solenoid valve 37 takes a time until a VGT negative pressure $VGTvp$ changes and levels off after it receives a duty signal. For this reason, the detection of a VGT negative pressure $VGTvp$ is made after stabilization thereof, i.e. in a later half of the period of tine (which is defined by the preset time count $Tt$) for which a duty signal is applied to VGT duty solenoid valve 37.

After providing the learning data $X\alpha$ relating to the learning duty ratio of 80% through steps S301 to S309 that is completed between points of time t2 and t3 in the time chart shown in Figure 18, learning $X\beta$ and learning $X\gamma$ relating to the learning duty ratios of 50% and 20%, respectively, are provided on the basis learning values $\beta$ and $\gamma$, respectively, by a substantially same process through steps S310 to 318 that take place between points of time t3 and t4 and steps S319 to S327 that take place between points of time t4 and t5, respectively. Finally, at step S328, learning data $X$ over possibly available duty ratios is drawn up by interpolating each adjacent learning values $\alpha$, $\beta$ and $\gamma$, and then, as shown by a broken line in Figure 17. As demonstrated in Figures 17 and 18 by way of example, though the VGT duty solenoid valve 37 is energized with a standard duty ratio $b$ to generate a VGT negative pressure of a level of $a$, as a result of the learning control, the VGT duty solenoid valve 37 necessitates to be energized with a duty ratio $d$ decreased by a learned value $c$ from the standard duty ratio $b$. The final step orders return to the main routine, after the step in the main routine calling for the basic target VGT negative pressure determination subroutine.

Referring back to the main routine in Figure 9A, a decision is made at step S8 as to whether a condition for implementation of the supercharging pressure feedback control (a supercharging pressure feedback condition) is satisfied. When the supercharging pressure feedback condition is satisfied, a subroutine of the supercharging pressure feedback control is called for to determine a feedback control value, i.e. a supercharging pressure feedback negative pressure *Fc*. On the other hand, when the supercharging pressure feedback condition is not yet satisfied, the supercharging pressure feedback negative pressure *Fc* is reset to 0 (zero), in other words, the supercharging pressure feedback control is made ineffective. In this instance, the supercharging pressure feedback condition is, for example, such that an engine operating condition falls in the engine operating region of extremely higher engine loads (a) or in the engine operating region of moderate engine speeds and moderate engine loads (b) shown in Figure 7 or 8, a changing rate of target negative pressure is small, and a difference between practical and target supercharging pressures is less than the specified pressure difference (h). With the decision, the supercharging pressure feedback control does not commence immediately even when an engine operating condition enters either the engine operating region of extremely higher engine loads (a) or the engine operating region of moderate engine speeds and moderate engine loads (b) but commences after the practical supercharging pressure reaches a level within an extent of the specified pressure difference (h). from the target supercharging pressure, so as to prevent the practical supercharging pressure from overshooting and hunting owing to a smooth switch of control mode upon an entry into the engine operating region of extremely higher engine loads (a) or the engine operating region of moderate engine speeds and moderate engine loads (b), thereby eliminating aggravation of the reliability of the variable geometry turbocharger 20 and stability of the control, and also preventing the engine 1 from causing fluctuations in engine output.

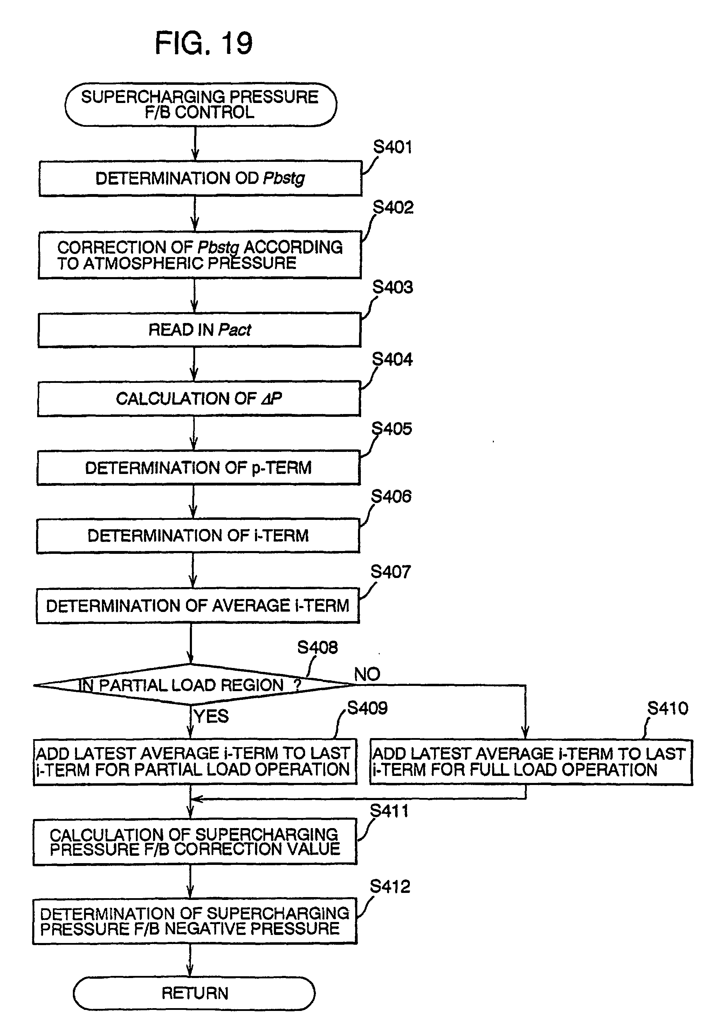

Figure 19 is a flow chart illustrating a subroutine of the supercharging pressure feedback control. In the supercharging pressure feedback control, after determining a basic target supercharging pressure *Pbstg* at step S401 and making a correction of the basic target supercharging pressure *Pbstg* according to an atmospheric pressure at step S402, a practical supercharging pressure *Pact* in the intake air passage 7 is read through the pressure sensor 81 in at step S403. Subsequently, after calculating a pressure difference Δ*P* between the practical supercharging pressure *Pact* and basic target supercharging pressure *Pbstg* after correction at step S404, calculations are consecutively made to determine a proportional term and an integral term of a feedback correction value at steps S405 and S406, respectively, and then, a calculation is made to determine an average of integral terms up to the latest cycle at step S407. Subsequently, a decision is made at step S408 as to whether an engine operating condition falls in the partial load engine operating region (the engine operating region of moderate engine speeds and moderate engine loads) (b). The average integral term is added by an integral term obtained during the last cycle of the supercharging pressure feedback control at a partial load condition when the engine operation condition falls in the partial load engine operating region (b) at step S409 or by an integral term obtained during the last cycle of the supercharging pressure feedback control at a full load condition when the engine operation condition does not fall in the partial load engine operating region (b) but halls in the full load engine operating region (a) at step S410. The resultant integral terms calculated at steps S409 and 410 are clipped by upper and lower limits.

Subsequently, at step S411, a calculation is made to determine a feedback correction value for the supercharging pressure feedback control on the basis of the proportional term calculated at step S405 and the integral term finalized at step S409 or S410. Applying such treatments including averaging, in particular, to the integral term attenuates an influence of a sharp change in feedback control value, so as to reinforce stability of the supercharging pressure feedback control. In this instance, the proportional term, integral term and feedback correction value that are calculated through steps S405 to 411 are given as areas of the nozzle 25 of the variable geometry type of turbocharger 20. Accordingly, the feedback correction value is finally converted to a negative pressure on the basis of, for example, a negative pressure that is developed when energizing the VGT duty solenoid valve 37 with a duty ratio of, for example, 100% and utilized as a supercharging pressure feedback negative pressure *Fc* at step S412. Then, the final step orders return to the main routine, after the step in the main routine calling for the supercharging pressure feedback control subroutine.

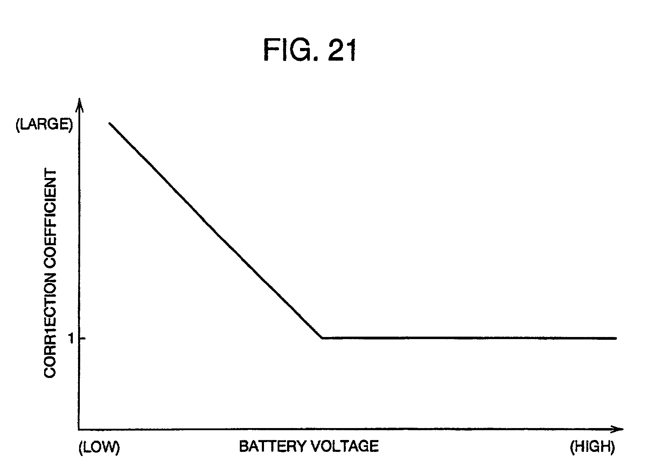

Referring back to Figure 9A, at step S11, a VGT target negative pressure *Fo* is determined by adding the basic target VGT negative pressure *Fa*, VGT feedback negative pressure *Fb* and supercharging pressure feedback negative pressure *Fc* together. Subsequently, a decision is made at step S12 as to whether the VGT negative learning control is under implementation. A resultant target negative pressure Ffo is determined by employing the negative pressure *Fg* corresponding to the learning duty ratio (80%, 50% or 20%) at step S13 when whether the VGT negative learning control is under implementation, or by employing the VGT target negative pressure *Fo* at step S14 when whether the VGT negative learning control is not under implementation. Subsequently, in Figure 9B, after converting the resultant target negative pressure *Ffo* to a practical duty ratio *Da* at step S15, a correction is made of the practical duty ratio *Da* according to the learning data X, an atmospheric pressure and a battery voltage at step S16. The correction of the practical duty ratio *Da* according to battery voltage is made to compensate a drop in practical duty ratio that is possibly caused due to a drop in battery voltage. Specifically, as shown in Figure 21, when the battery voltage declines lower than a specified level, a correction coefficient is increased from a value of 1 (one) in inversely proportion to a drop in battery voltage. Thereafter, a decision is made at step S17 as to whether a condition for prohibiting supercharging (a supercharging prohibition condition) is satisfied. The supercharging prohibition condition is, for example, such that an ignition switch is off, that the engine starts up, that there are fluctuations in exhaust gas pressure during operation of the exhaust shutter 11, or that either one of the sensors, in particular the pressure sensor 83 associated with the VGT control is breaks down. After the practical duty ratio *Da* or reset it to 0% at step S18 when the supercharging prohibition condition is satisfied at step S17 or directly when the supercharging prohibition condition is unsatisfied at step S17, a duty signal is output to energize the VGT duty solenoid valve 37 with the practical duty ratio *Da* at step S19. Then, the final step orders return to repeat another routine of the main routine.

As apparent from the above embodiment, according to the present invention, when feedback controlling a supercharging pressure to a target supercharging pressure by controlling the variable geometry supercharger, in particular even when the engine changes in operating condition from the region of lower engine loads to the region of higher engine loads due to stepping down an accelerator pedal for acceleration, the variable geometry supercharger is free from the problems of overspeeding of the turbine and seizing of the turbine shaft which lead to aggravation of the reliability of the variable geometry supercharger.

It is to be understood that although the present invention has been described in detail with respect to the preferred embodiments thereof, various other embodiments and variants may occur to those skilled in the art, which are within the scope and spirit of the invention, and such other embodiments and variants are intended to be covered by the following claims.

**Claims**

1. A system of controlling an engine (1) equipped with a supercharger (20) for generating a supercharging pressure in an intake air passage (7) which has a nozzle (24) variable in nozzle area (25) relative to a turbine (22), said system comprising pressure detecting means (81) for detecting a practical supercharging pressure in said intake passage (7), condition detection means (86, 87) for detecting an engine operating condition of the supercharged engine (1); and control means (30, 37, 83, 100) for determining a target supercharging pressure according to said engine operating condition and performing feedback control of said supercharging pressure by feedback controlling a nozzle area (25) of said variable nozzle (24) so as to bring said practical supercharging pressure in said intake passage (7) to said target supercharging pressure, whereby said control means (30, 37, 83, 100) restrains said feedback control temporarily when said engine operating condition changes from a region of lower engine loads to a region of higher engine loads and removes said restraint of said feedback control of said supercharging pressure when a difference between said practical supercharging pressure and said target supercharging pressure is smaller than a specified value.

2. A system of controlling an engine as defined in claim 1, wherein said control means (30, 37, 83, 100) prohibits said feedback control of said supercharging pressure when said engine operating condition falls in a region of lower engine speeds.

3. A system of controlling an engine as defined in claim 1 or 2, wherein said control means (30, 37, 83, 100) controls said nozzle (24) so as to attain said nozzle area (25) greater than said nozzle area (25) at which said supercharger generates said target supercharging pressure.

4. A system of controlling an engine as defined either one of the preceding claims 1 to 3, wherein said control means (30, 37, 83, 100) restrains said feedback control of said supercharging pressure by at least one of prohibiting said feedback control of said nozzle (24), voiding a feedback control value as a result of implementation of said feedback control of said nozzle (2) and decreasing a gain of said feedback control of said nozzle.

**Patentansprüche**

1. System zum Regeln bzw. Steuern eines Motors (1), welcher mit einem Turbolader (20) zum Erzeugen eines Aufladedrucks in einem Einlaßluftdurchtritt (7) ausgerüstet ist, welches eine Düse (24) aufweist, welche in einem Düsenbereich bzw. einer Düsenfläche (25) relativ zu einer Turbine (22) veränderbar ist, wobei das System Druckdetektionsmittel (81) zum Detektieren eines praktischen bzw. tatsächlichen Aufladedrucks in dem Aufnahme- bzw. Einlaßdurchtritt (7), Bedingungs- bzw. Zustandsdetektionsmittel (86, 87) zum Detektieren bzw. Feststellen eines Motorbetriebszustands des aufgeladenen Motors (1), und Regel- bzw. Steuermittel (30, 37, 83, 100) zum Bestimmen eines Ziel-Aufladedrucks gemäß dem Motorbetriebszustand und zum Durchführen einer Rückkopplungs- bzw. Feedbacksteuerung des Aufladedrucks durch ein Feedbacksteuern bzw. -regeln einer Düsenfläche (25) der variablen Düse (24) umfaßt, um den tatsächlichen Aufladedruck in dem Einlaßdurchtritt (7) auf den Ziel-Aufladedruck zu bringen, wobei die Regel- bzw. Steuermittel (30, 37, 83, 100) die Feedbacksteuerung vorübergehend beschränken bzw. unterdrücken, wenn sich der Motorbetriebszustand von einem Bereich niedrigerer Motorlasten zu einem Bereich bzw. einer Region höherer Motorlasten ändert, und die Beschränkung der Feedbacksteuerung des Aufladedrucks entfernen, wenn ein Unterschied zwischen dem tatsächlichen Aufladedruck und dem Ziel-Aufladedruck geringer als ein bestimmter Wert ist.

2. System zum Regeln bzw. Steuern eines Motors nach Anspruch 1, wobei die Regel- bzw. Steuermittel (30, 37, 83, 100) die Feedbacksteuerung des Aufladedrucks verbieten, wenn der Motorbetriebszustand in einen Bereich von niedrigeren Motordrehzahlen fällt.

3. System zum Regeln bzw. Steuern eines Motors nach Anspruch 1 oder 2, wobei die Regel- bzw. Steuermittel (30, 37, 83, 100) die Düse (24) regeln bzw. steuern, um die Düsenfläche (25) größer als die Düsenfläche (25) einzunehmen bzw. zu erreichen, bei welcher der Turbolader den Ziel-Aufladedruck erzeugt bzw. generiert.

4. System zum Regeln bzw. Steuern eines Motors nach einem der vorangehenden Ansprüche 1 bis 3, wobei die Regel- bzw. Steuermittel (30, 37, 83, 100) die Feedbacksteuerung des Aufladedrucks durch wenigstens eines aus einem Verbieten der Feedbacksteuerung der Düse (24), einem Löschen bzw. Aufheben eines Feedback-Steuerwerts als ein Resultat einer Implementation der Feedbacksteuerung der Düse (2) und einem Abnehmen bzw. Verringern einer Verstärkung der Feedbacksteuerung der Düse beschränken bzw. unterdrücken.

**Revendications**

1. Un système de commande pour un moteur (1) équipé d'un compresseur volumétrique (20) destiné à générer une pression de suralimentation dans un canal (7) d'air d'admission qui possède une buse (24) variable dans la surface de buse (25) par rapport à une turbine (22) ; ledit système comprenant des moyens (81) de détection de pression destinés à détecter une pression de suralimentation de service dans ledit canal (7) d'admission, des moyens (86, 87) de détection d'état pour détecter un état de fonctionnement du moteur du moteur suralimenté (1), et des moyens de commande (30, 37, 83, 100) pour déterminer une pression de suralimentation cible selon ledit état de fonctionnement du moteur et pour réaliser une commande à rétroaction de ladite pression de suralimentation par un control à rétroaction d'une surface de buse (25) de ladite buse (24) variable de manière à amener ladite pression de suralimentation de service dans ledit canal (7) d'admission vers ladite pression de suralimentation cible ; où lesdits moyens de commande (30, 37, 83, 100) limitent ladite commande à rétroaction temporairement lorsque ledit état de fonctionnement du moteur change d'une zone de charge de moteur inférieure vers une zone de charge de moteur supérieure et retire ladite limitation de ladite commande à rétroaction de ladite pression de suralimentation lorsqu'une différence entre ladite pression de suralimentation de service et ladite pression de suralimentation cible est inférieure à une valeur spécifique.

2. Un système de commande pour un moteur, comme défini dans la revendication 1, où lesdits moyens de commande (30, 37, 83, 100) limitent ladite commande à rétroaction de ladite pression de suralimentation lorsque ledit état de fonctionnement du moteur tombe dans une zone de vitesses de moteur inférieures.

3. Un système de commande pour un moteur comme défini dans la revendication 1 ou 2, où lesdits moyens de commande (30, 37, 83, 100) commandent ladite buse (24) de manière à ce que ladite surface de buse (25) soit supérieure à ladite surface de buse (25) où ladite suralimentation génère ladite pression de suralimentation cible.

4. Un système de commande pour un moteur comme défini dans n'importe laquelle des revendications précédentes 1 à 3, où lesdits moyens de commande (30, 37, 83, 100) limite ladite commande à rétroaction de ladite pression de suralimentation en empêchant au moins ladite commande à rétroaction de ladite buse (24), ayant pour résultat l'annulation d'une valeur de commande à rétroaction de ladite commande à rétroaction de ladite buse (2) et la diminution en diminuant le gain de ladite commande à rétroaction de ladite buse.

FIG. 1

# FIG. 2

## FIG. 3

# FIG. 4

EP 1 081 353 B1

## FIG. 5

SUPERCHARGING PRESSURE
F/B CONTROL REGION (a)

- NON-EGR CONTROL REGION -

SUPERCHARGING PRESSURE
F/B CONTROL REGION (b)

- EGR CONTROL REGION -

ENGINE LOAD (AMOUNT OF FUEL)

ENGINE SPEED

## FIG. 6

-R3-

-R2-

-R1-

NOZZLE AREA

ENGINE LOAD (AMOUNT OF FUEL)

ENGINE SPEED

ENGINE SPEED

20

# FIG. 7

SUPERCHARGING PRESSURE
F/B CONTROL REGION (a)

- VGT NEGATIVE PRESSURE F/B-CONTROL REGION -

SUPERCHARGING PRESSURE
F/B CONTROL REGION (b)

- EGR CONTROL REGION -

ENGINE LOAD (AMOUNT OF FUEL)

ENGINE SPEED

# FIG. 8

SUPERCHARGING PRESSURE
F/B CONTROL REGION (a)

OPEN CONTROL REGION

SUPERCHARGING PRESSURE
F/B CONTROL REGION (b)

ENGINE LOAD (AMOUNT OF FUEL)

ENGINE SPEED

## FIG. 9A

```
        ┌─────────────────────────┐
        │   VGT DUTY SOLENOID     │
        │     VALVE CONTROL       │
        └─────────────────────────┘
                    │
                    ▼                    S1
        ┌─────────────────────────┐
        │     READ IN SIGNALS     │
        └─────────────────────────┘
                    │
                    ▼                    S2
        ┌─────────────────────────┐
        │   DETERMINATION OF Fa    │
        └─────────────────────────┘
                    │
                    ▼                    S3
          ╱─────────────────────╲  NO
         ╱  VGT NEGATIVE PRESSURE ╲──────────────────┐
         ╲  F/B CONTROL CONDITION ?╱                  │
          ╲─────────────────────╱                     │
                    │ YES                              │
                    ▼               S4                 │          S5
        ┌─────────────────────────┐        ┌────────────────────────┐
        │   VGT NEGATIVE PRESSURE  │        │      Fb ◄──── 0        │
        │   F/B CONTROL FOR        │        └────────────────────────┘
        │   DETERMINATION OF Fb    │
        └─────────────────────────┘
                    │◄───────────────────────────────┘
                    ▼                    S6
          ╱─────────────────────╲  NO
         ╱  VGT NEGATIVE PRESSURE ╲──────────────────┐
         ╲  LEARNING CONDITION ?  ╱                  │
          ╲─────────────────────╱                     │
                    │ YES                              │
                    ▼               S7                 │
        ┌─────────────────────────┐                   │
        │   VGT NEGATIVE PRESSURE  │                   │
        │   LEARNING CONTROL       │                   │
        └─────────────────────────┘                   │
                    │◄───────────────────────────────┘
                    ▼                    S8
          ╱─────────────────────╲  NO
         ╱  SUPERCHARGING PRESSURE╲──────────────────┐
         ╲  F/B CONTROL CONDITION ?╱                  │
          ╲─────────────────────╱                     │
                    │ YES                              │
                    ▼               S9                 │         S10
        ┌─────────────────────────┐        ┌────────────────────────┐
        │  SUPERCHARGING PRESSURE  │        │      Fc ◄──── 0        │
        │  F/B CONTROL FOR         │        └────────────────────────┘
        │  DETERMINATION OF Fc     │
        └─────────────────────────┘
                    │◄───────────────────────────────┘
                    ▼                    S11
        ┌─────────────────────────┐
        │   Fo = Fa + Fb + Fc      │
        └─────────────────────────┘
                    │
                    ▼                    S12
          ╱─────────────────────╲  NO
         ╱   UNDER VGT NEGATIVE   ╲──────────────────┐
         ╲  PRESSURE LEARNING ?   ╱                  │
          ╲─────────────────────╱                     │
                    │ YES                              │
                    ▼          S13                     ▼          S14
        ┌─────────────────────────┐        ┌────────────────────────┐
        │     Ffo ◄──── Fg        │        │     Ffo ◄──── Fo       │
        └─────────────────────────┘        └────────────────────────┘
                    │◄───────────────────────────────┘
                    ▼
                   (A)
```

# FIG. 9B

(A)

S15
CONVERT *Ffo* TO *Da*

S16
CORRECTION OF *Da* AND
DETERMINATION OF *Do*

S17
CHARGE PROHIBITION
CONDITION ? — NO

YES

S18
*Da* ⟵ 0

S19
PUTPUT DUTY SIGNAL OF *Da*

RETURN

## FIG. 10

```
        ┌─────────────────────┐
        │  DETERMINATION OF   │
        │  BASIC TARGET VGT   │
        │  NEGATIVE PRESSURE  │
        └─────────────────────┘
                   │
                   ▼
              S101
          ◇ START-UP ? ◇──────NO──────┐
               │                       │
              YES                   S103
               │              ◇ CHARGE CUT- ◇──────NO──────┐
               │              ◇ OFF REGION ? ◇              │
               │                    │                    S105
    ┌──────────────────┐           YES           ◇ IDLING ? ◇──────NO──────┐
    │ TARGET SUPER-    │            │                  │                    │
    │ CHARGE PRESSURE  │            │                 YES               S107
    │ FOR START-UP     │            │                  │        ◇ FULL LOAD  ◇──NO──┐
    └──────────────────┘  ┌──────────────────┐         │        ◇ CONDITION ? ◇      │
         │                │ TARGET SUPER-    │          │              │             │
       S102               │ CHARGE PRESSURE  │          │             YES            │
         │                │ FOR CHARGE CUT-OFF│         │              │             │
         │                └──────────────────┘ ┌──────────────────┐   │             │
         │                     │               │ TARGET SUPER-    │   │             │
         │                   S104              │ CHARGE PRESSURE  │    │             │
         │                     │               │ FOR IDLING      │┌──────────────────┐
         │                     │               └──────────────────┘ TARGET SUPER-    │
         │                     │                    │            │ CHARGE PRESSURE  │
         │                     │                  S106          │ FOR FULL LOAD    │
         │                     │                    │           └──────────────────┘
         │                     │                    │                │           ┌──────────────────┐
         │                     │                    │              S108          │ TARGET SUPER-    │
         │                     │                    │                │           │ CHARGE PRESSURE  │
         │                     │                    │                │           │ FOR PARTIAL LOAD │
         │                     │                    │                │           └──────────────────┘
         │                     │                    │                │                │
         │                     │                    │                │              S109
         └─────────────────────┴────────────────────┴────────────────┴────────────────┘
                                                   │
                                                   ▼
                              ┌──────────────────────────────┐  S110
                              │ CORRECTION ACCORDING         │
                              │ TO ATMOSPHERIC PRESSURE      │
                              └──────────────────────────────┘
                                                   │
                              ┌──────────────────────────────┐  S111
                              │ CORRECTION ACCORDING         │
                              │ TO INTAKE AIR TEMPERAYTURE   │
                              └──────────────────────────────┘
                                                   │
                              ┌──────────────────────────────┐  S112
                              │          ANNEALING           │
                              └──────────────────────────────┘
                                                   │
                              ┌──────────────────────────────┐  S113
                              │    CORRECTION FOR ADVANCE     │
                              └──────────────────────────────┘
                                                   │
                                                   ▼
                                         (   RETURN   )
```

# FIG. 11

CHARGE CUT-OFF REGION

ACTUAL SUPER-CHARGING PRESSURE

ENGINE SPEED

# FIG. 12

(CLOSE)

VGT NOZZLE AREA

(OPEN)

(HIGH)　　　ATMOSPHERIC PRESSURE　　　(LOW)

# FIG. 13

EP 1 081 353 B1

# FIG. 14

VGT NEGATIVE PRESSURE
F/B CONTROL

INTEGRATION OF BASIC TARGET
VGT NEGATIVE PRESSURES — S201

INTEGRATION OF PRACTICAL VGT
NEGATIVE PRESSURES — S202

CALCULATION OF AVERAGE BASIC
TARGET VGT NEGATIVE PRESSURE — S203

CALCULATION OF AVERAGE PRACTICAL
VGT NEGATIVE PRESSURE — S204

CALCULATION OF DUTY RATIO FOR AVERAGE
BASIC TARGET VGT NEGATIVE PRESSURE
BASED ON BASIC CHARACTERISTICS — S205

CALCULATION OF DUTY RATIO FOR AVERAGE
PRACTICAL VGT NEGATIVE PRESSURE BASED
ON BASIC CHARACTERISTICS — S206

CALCULATION OF DURY RATIO DIFFERENCE
BASED ON BASIC CHARACTERISTICS — S207

CALCULATION OF DUTY RATIO FOR AVERAGE
BASIC TARGET VGT NEGATIVE PRESSURE
BASED ON LEARNING VALUE — S208

CALCULATION OF DUTY RATIO FOR AVERAGE
PRACTICAL VGT NEGATIVE PRESSURE
BASED ON LEARNING VALUE — S209

CALCULATION OF DURY RATIO DIFFERENCE
BASED ON LEARNING VALUE — S210

DETERMINATION OF VGT NEGATIVE PRESSURE
F/B CONTROL VALUE — S211

DETERMINATION OF VGT F/B NEGATIVE PRESSURE — S212

RETURN

27

## FIG. 15A

```
        ┌──────────────────────────┐
        │  VGT NEGATIVE PRESSURE   │
        │   LEARNING CONTROL       │
        └──────────────────────────┘
                    │
                    ▼                    S301
        ┌──────────────────────────┐
  NO ◄──┤   IS LEARNING DATA Xα     │
        │   NOT YET PROVIDED ?      │
        └──────────────────────────┘
                    │ YES
                    ▼                    S302
        ┌──────────────────────────┐
        │  RESETTING TIMER COUNT Tt │
        └──────────────────────────┘
                    │
                    ▼                    S303
        ┌──────────────────────────┐
        │ ENERGIZE VGT DUTY DOLENOID│
        │ VALVE WITH DUTY RATIO OF 80%│
        └──────────────────────────┘
                    │
  S304              ▼
        ╱────────────────────╲      NO
        ╲    Tt  =  0 ?       ╱ ──────────┐
         ╲──────────────────╱             │
                    │ YES                  │
                    │                      ▼                    S305
                    │              ╱──────────────────╲    NO
                    │              ╲  HAS WAITING       ╱──────┐
  S309              │              ╱  TIME Ta PASSED ? ╲       │
                    │              ╲──────────────────╱        │
                    ▼                      │ YES                │
        ┌──────────────────────┐           │                    │
        │ PROVIDE LEARNING     │           ▼              S306   │
        │ DATA Xα              │   ┌──────────────────────┐      │
        └──────────────────────┘   │  DETECTION OF VGTvp  │      │
                    │        S307   └──────────────────────┘      │
                    │               ┌──────────────────────────────┐
                    │               │VGTvint = VGTvint(i-1) + VGTvp │
                    │               └──────────────────────────────┘
                    │        S308            │                     │
                    │               ┌──────────────────────┐       │
                    │               │   Tt ◄── Tt - 1       │◄──────┘
                    │               └──────────────────────┘
                    ▼                       │
                   (B)                      │
```

## FIG. 15B

(B)

S310

NO — IS LEARNING DATA $X\beta$ NOT YET PROVIDED ?

YES

S311

RESETTING TIMER COUNT $Tt$

S312

ENERGIZE VGT DUTY DOLENOID VALVE WITH DUTY RATIO OF 50%

S313

$Tt = 0 ?$ — NO

YES

S314

HAS WAITING TIME $Ta$ PASSED ? — NO

YES

S315

DETECTION OF $VGTvp$

S316

$VGTvint = VGTvint(i-1) + VGTvp$

S318

PROVIDE LEARNING DATA $X\beta$

S317

$Tt \longleftarrow Tt - 1$

(C)

## FIG. 15C

Ⓒ

S319

NO — IS LEARNING DATA $X\gamma$ NOT YET PROVIDED ?

YES

S320

RESETTING TIMER COUNT $Tt$

S321

ENERGIZE VGT DUTY DOLENOID VALVE WITH DUTY RATIO OF 20%

S322

$Tt = 0$ ? — NO

YES

S323

HAS WAITING TIME $Ta$ PASSED ? — NO

YES

S327

PROVIDE LEARNING DATA $X\gamma$

S324

DETECTION OF $VGTvp$

S325

$VGTvint = VGTvint(i-1) + VGTvp$

S326

$Tt \leftarrow Tt - 1$

S328

PROVIDE LEARNING DATA $X$

RTURN

## FIG. 16

## FIG. 17

# FIG. 18

# FIG. 19

```
    ┌─────────────────────────────┐
    │  SUPERCHARGING PRESSURE     │
    │        F/B CONTROL          │
    └─────────────────────────────┘
                  │
                  ▼
    ┌─────────────────────────────┐  S401
    │   DETERMINATION OD Pbstg     │
    └─────────────────────────────┘
                  │
                  ▼
    ┌─────────────────────────────┐  S402
    │  CORRECTION OF Pbstg ACCORDING│
    │  TO ATMOSPHERIC PRESSURE      │
    └─────────────────────────────┘
                  │
                  ▼
    ┌─────────────────────────────┐  S403
    │        READ IN Pact          │
    └─────────────────────────────┘
                  │
                  ▼
    ┌─────────────────────────────┐  S404
    │     CALCULATION OF ΔP        │
    └─────────────────────────────┘
                  │
                  ▼
    ┌─────────────────────────────┐  S405
    │   DETERMINATION OF p-TERM    │
    └─────────────────────────────┘
                  │
                  ▼
    ┌─────────────────────────────┐  S406
    │   DETERMINATION OF i-TERM    │
    └─────────────────────────────┘
                  │
                  ▼
    ┌─────────────────────────────┐  S407
    │ DETERMINATION OF AVERAGE i-TERM│
    └─────────────────────────────┘
                  │
                  ▼            S408
         ◇─────────────────────◇        NO
         ◇ IN PARTIAL LOAD REGION ? ◇────────────────────┐
         ◇─────────────────────◇                         │
                  │ YES                                   │
                  ▼            S409                        ▼            S410
    ┌─────────────────────────────┐    ┌─────────────────────────────┐
    │ADD LATEST AVERAGE i-TERM TO LAST│ │ADD LATEST AVERAGE i-TERM TO LAST│
    │i-TERM FOR PARTIAL LOAD OPERATION│ │i-TERM FOR FULL LOAD OPERATION   │
    └─────────────────────────────┘    └─────────────────────────────┘
                  │◄─────────────────────────────────────┘
                  ▼            S411
    ┌─────────────────────────────┐
    │  CALCULATION OF SUPERCHARGING│
    │  PRESSURE F/B CORRECTION VALUE│
    └─────────────────────────────┘
                  │
                  ▼            S412
    ┌─────────────────────────────┐
    │ DETERMINATION OF SUPERCHARGING│
    │ PRESSURE F/B NEGATIVE PRESSURE│
    └─────────────────────────────┘
                  │
                  ▼
    ┌─────────────────────────────┐
    │          RETURN             │
    └─────────────────────────────┘
```

# FIG. 20

ACCELERATOR TRAVEL

100%

0%

ENGINE SPEED

FULL LOAD JUDGING
THRESHOLD SPEED

FULL LOAD
JUDGEMENT
FLAG

TARGET
SUPERCHARGING
PRESSURE

A

C

K

h

Δ

B

D

h

K

SUPERCHARGING
PRESSURE
F/B CONTROL
FLAG

TIME

t1    t2        t3

# FIG. 21